# EUROPÄISCHE PATENTSCHRIFT

(11) **EP 3 019 264 B1**
(45) Veröffentlichungstag und Bekanntmachung des Hinweises auf die Patenterteilung: **01.09.2021**
(21) Anmeldenummer: 14736795.7
(22) Anmeldetag: 08.07.2014
(51) Int. Cl.: B01D 27/08

(54) **SPIN-ON FILTER FÜR EINE FILTERVORRICHTUNG FÜR FLUID, FILTERVORRICHTUNG UND FILTERKOPF EINER FILTERVORRICHTUNG**
SPIN-ON FILTER FOR A FILTER DEVICE FOR FLUID, FILTER DEVICE AND FILTER HEAD OF A FILTER DEVICE
FILTRE MONOBLOC POUR DISPOSITIF DE FILTRATION DE FLUIDE, DISPOSITIF DE FILTRATION ET TÊTE DE FILTRE D'UN DISPOSITIF DE FILTRATION

(30) Priorität: 12.07.2013 DE 102013011619
(43) Veröffentlichungstag der Anmeldung: 18.05.2016
(73) Patentinhaber: MANN+HUMMEL GmbH, 71636 Ludwigsburg (DE)
(72) Erfinder: JOKSCHAS, Günter, 71540 Murrhardt (DE); SANCAR, Ercan, 71679 Asperg (DE)
(86) Internationale Anmeldenummer: PCT/EP2014/064532
(87) Internationale Veröffentlichungsnummer: WO 2015/004100

(56) Entgegenhaltungen:
- WO-A1-95/11072
- DE-A1-102011 009 925
- JP-A- H0 596 107
- JP-A- 2011 062 658
- US-A1- 2012 261 323

## Beschreibung

### Technisches Gebiet

Die Erfindung betrifft einen Spin-On Filter für eine Filtervorrichtung für Fluid, insbesondere Flüssigkeit, insbesondere Öl oder Kraftstoff, insbesondere einer Brennkraftmaschine, insbesondere eines Kraftfahrzeugs. Ferner betrifft die Erfindung eine Filtervorrichtung für Fluid, insbesondere Flüssigkeit, insbesondere Öl oder Kraftstoff, insbesondere einer Brennkraftmaschine, insbesondere eines Kraftfahrzeugs.

Außerdem betrifft die Erfindung einen Filterkopf einer Filtervorrichtung für Fluid, insbesondere Flüssigkeit, insbesondere Öl oder Kraftstoff, insbesondere einer Brennkraftmaschine, insbesondere eines Kraftfahrzeugs.

### Stand der Technik

Aus der EP 0 830 885 A1 ist eine Filtervorrichtung mit einem Filterkopf und einer Filterpatrone bekannt. Die Filterpatrone ist an dem Filterkopf befestigt. Der Filterkopf umfasst eine Mehrzahl von nach außen gerichteten ansteigenden Vorsprüngen, welche eine erste Komponente einer bajonettartigen Verbindung bilden. Die ansteigenden Vorsprünge sind zusammenwirkend mit ähnlichen Vorsprüngen der Filterpatrone zum Befestigen der Filterpatrone an dem Filterkopf.

Aus US 2012/261323 A1 ist eine Filtervorrichtung mit einer Sicherung gegen das Aufbringen eines zu hohen Drehmoments bei der Montage des Spin-On Filters am Filterkopf bekannt.

DE 10 2011 009925 A1 betrifft einen Wechselfilter mit einem zentralen Fluiddurchlass, in welchen ein Anschlussstutzen eines Filterkopfs mittels einer Dreh- und/oder Steckverbindung eingebracht werden kann.

WO 95/11072 A1 beschreibt einen Wechselfilter, der an einen Filterkopf anschraubbar ist und mittels einer radialen Außendichtung gegen den Filterkopf abdichtet.

Aus JP H0596107A und JP 2011062658A sind Filtervorrichtungen mit Spin-On Filtern bekannt, wobei der Spin-On Filter mittels einer Schraubverbindung mit dem Filterkopf verbunden ist. Eine Außendichtung verhindert das Eindringen von Schmutz.

Der Erfindung liegt die Aufgabe zugrunde, einen Spin-On Filter, eine Filtervorrichtung und einen Filterkopf der eingangs benannten Art zu gestalten, bei der/dem eine Trennung einer Rohseite des Spin-On Filters von einer Reinseite im Bereich der Verbindungseinrichtung verbessert werden kann.

### Offenbarung der Erfindung

Diese Aufgabe wird erfindungsgemäß durch einen Spin-On Filter nach Anspruch 1 gelöst. Der Spin-On Filter weist auf:
- einen Gehäusetopf, in welchem ein Filterelement angeordnet ist,
- einen stirnseitig an dem Gehäusetopf angeordneten Anschlusskörper, welcher mit einer mittigen Zentralöffnung und insbesondere mit wenigstens einer gegenüber der Zentralöffnung nach radial außen versetzten Fluidöffnung versehen ist,
- ein filterseitiges Verbindungsteil einer Verbindungseinrichtung zum lösbaren Verbinden des Spin-On Filters mit einem Filterkopf der Filtervorrichtung, welches an der mittigen Zentralöffnung angeordnet ist,
wobei das filterseitige Verbindungsteil mittels einer Steck- und/oder Drehbewegung bzgl. einer Verbindungsachse mit einem Anschlussstutzen eines kopfseitigen Verbindungsteils des Filterkopfs lösbar verbindbar ist, und wobei eine Innendichtung vorgesehen ist, welche eine um einen mittigen Fluidkanal umlaufende und axial gegenüber dem filterseitigen Verbindungsteil zu dem Filterelement hin versetzte Dichtungsfläche aufweist, an welcher eine umlaufende Dichtfläche eines filterkopfseitigen Fluidstutzens, dichtend anlegbar ist, um eine Rohseite von einer Reinseite des Spin-On Filters zu trennen.

Bei der erfindungsgemäßen Ausführungsform bildet die Dichtungsfläche der Innendichtung eine bzgl. der Verbindungsachse zumindest axiale Anlage für die Dichtfläche des kopfseitigen Fluidstutzens.

Derartige Spin-On Filter können bekanntermaßen auch als Wechselfilter oder Aufdrehfilter bezeichnet werden. Bei dem Spin-On Filter ist wenigstens ein Filterelement in dem Gehäusetopf des Filtergehäuses angeordnet. Der Spin-On Filter wird komplett mit dem Filtergehäuse und dem darin enthaltenen wenigstens einen Filterelement ausgetauscht. Vorteilhafterweise kann das wenigstens eine Filterelement fest in dem Filtergehäuse angeordnet sein.

Vorteilhafterweise kann der Fluidkanal ein Fluidablaufkanal sein, durch den Fluid aus dem Innenraum des Filterelements heraus gelangen kann. Bei umgekehrter Durchströmung des Filterelements kann der Fluidkanal auch ein Zulaufkanal sein, durch den Fluid in einen Innenraum des Filterelements gelangen kann.

Vorteilhafterweise kann der Fluidstutzen ein Fluidablaufstutzen sein, über den das Fluid aus dem Spin-On Filter heraus strömen kann. Alternativ kann der Fluidstutzen auch ein Zulaufstutzen sein, über den das Fluid aus dem Filterkopf in den Spin-On Filter gelangen kann. Der Fluidstutzen kann vorteilhafterweise ein Abschnitt eines Anschlussstücks, insbesondere Anschlusshülsenabschnitt, des Filterkopfs sein.

Insbesondere ist der Spin-On Filter bzw. die Filtervorrichtung derart gestaltet, dass das ungefilterte Fluid an einer Stirnseite zugeführt wird, und das gefilterte Fluid an derselben Stirnseite abgeführt wird.

Vor diesem Hintergrund kann zumindest eine außermittige Fluidöffnung des Anschlusskörpers vorteilhafterweise eine Fluidzulauföffnung sein, durch die Fluid in den Spin-On Filter gelangen kann. Alternativ kann die zumindest eine Fluidöffnung eine Fluidablauföffnung sein, durch die Fluid aus dem Spin-On Filter heraus gelangen kann.

Alternativ ist es aber auch möglich, dass sowohl das Rohfluid als auch das Reinfluid über die Zentralöffnung in den Filter bzw. aus dem Filter herausströmt.

Der Anschlusskörper kann vorteilhafterweise eine Anschlussplatte sein. Vorteilhafterweise kann der Anschlusskörper ein Deckel eines Gehäuses des Spin-On Filters sein. Mit dem Deckel kann vorteilhafterweise der Gehäusetopf abgedeckt werden.

Der kopfseitige Verbindungsteil kann vorteilhafterweise als Anschlussstutzen ausgelegt sein. Der kopfseitige Verbindungsteil kann alternativ auch einen Abschnitt aufweisen, welcher die Funktion und/oder Form eines Anschlussstutzens hat.

Vorteilhafterweise kann die Innendichtung bzgl. der Verbindungsachse axial gegenüber dem filterseitigen Verbindungsteil zum Innenraum des Spin-On Filters hin versetzt angeordnet sein.

Bei einer weiteren vorteilhaften Ausführungsform kann die Innendichtung mit dem Filterelement verbunden sein.

Bei einer weiteren vorteilhaften Ausführungsform kann das filterseitige Verbindungsteil mehrere Verbindungsstege aufweisen, die in Umfangrichtung der Verbindungsachse verteilt der Zentralöffnung angeordnet sind.

Vorteilhafterweise können die Verbindungsstege bzgl. der Verbindungsachse umfangsmäßig durchgängig sein. Die Verbindungsstege können bzgl. der Verbindungsachse umfangsmäßig auch Unterbrechungen aufweisen.

Vorteilhafterweise können die Verbindungsstege an ihrer dem Filterkopf abgewandten Seite jeweils wenigstens eine zur Verbindungsachse schräg verlaufende, filterseitige Haltefläche und an ihrer dem Filterkopf zugewandten Seite jeweils wenigstens eine zur Verbindungsachse schräg verlaufende Zuführrampe aufweisen, mittels derer kopfseitige Halteflächen an dem kopfseitigen Verbindungsteil bei der Montage des Spin-On Filters an den Filterkopf den filterseitigen Halteflächen unter Drehung des Spin-On Filters zuführbar sind.

Vorteilhafterweise können die Verbindungsstege an einer radial inneren Umfangsseite des Anschlusskörpers angeordnet sein.

Vorteilhafterweise können die Verbindungsstege radial nach innen ragen. Vorteilhafterweise können die Verbindungsstege nach radial innen in die Zentralöffnung ragen.

Auf diese Weise kann eine stabile und kompakte Bauform realisiert werden. Die Verbindungsstege können an einem Innenumfang der Zentralöffnung angeordnet sein.

Vorteilhafterweise können dem Filterkopf zugewandte Anfänge der Verbindungsstege bzgl. der Verbindungsachse umfangsmäßig verteilt, insbesondere gleichmäßig verteilt, angeordnet sein.

Auf diese Weise kann das Risiko einer Verkippung des Spin-On Filters beim Anbau an dem Filterkopf verringert, vorzugsweise verhindert, werden.

Vorteilhafterweise können dem Filterkopf zugewandte Anfänge der Verbindungsstege zu einem kopfseitigen, die Zentralöffnung umgebenden radial inneren Rand des Anschlusskörpers bzgl. der Verbindungsachse axial beabstandet sein.

Auf diese Weise kann ein Abschnitt der radial inneren Umfangsseite des Anschlusskörpers, der die Zentralöffnung begrenzt, zwischen den entsprechenden Anfängen der Verbindungsstege und dem Rand des Anschlusskörpers als axiale Einführhilfe für den Anschlussstutzen auf der Seite des Filterkopfs wirken.

Die dem Filterkopf zugewandten Anfänge der Verbindungsstege können vorteilhafterweise mit einen axialen Versatz gegenüber dem kopfseitigen Rand der Zentralöffnung angeordnet sein.

Bei einer weiteren vorteilhaften Ausführungsform kann die Verbindungseinrichtung wenigstens eine bzgl. der Verbindungsachse umfangsmäßige Außendichtung aufweisen.

Vorteilhafterweise kann die Außendichtung an dem Anschlusskörper angeordnet sein.

Vorteilhafterweise kann die Außendichtung bzgl. der Verbindungsachse nach radial außen orientiert sein. Vorteilhafterweise kann die Außendichtung die wenigstens eine Fluidöffnung und die Zentralöffnung umgeben.

Vorteilhafterweise kann die Außendichtung zwischen dem Filterkopf und dem Spin-On Filter wenigstens radial bzgl. der Verbindungsachse abdichten. Sie kann einen fluidführenden Raum der Filtervorrichtung von der Umgebung trennen.

Vorteilhafterweise kann der Spin-On Filter einer Filtervorrichtung für Fluid, insbesondere Flüssigkeit, insbesondere Öl oder Öl Kraftstoff, insbesondere einer Brennkraftmaschine, insbesondere eines Kraftfahrzeugs, einen filterseitigen Verbindungsteil einer mittels einer Steck- und/oder Drehbewegung bzgl. einer Verbindungsachse schließbaren und lösbaren Verbindungseinrichtung aufweisen, welcher mit einem kopfseitigen Verbindungsteil eines Filterkopfs der Filtervorrichtung lösbar verbunden werden kann.

Erfindungsgemäß weist die Verbindungseinrichtung am Spin-On Filter wenigstens eine bzgl. der Verbindungsachse umfangsmäßige Innendichtung auf, welche zwischen dem Filterkopf und dem Spin-On Filter wenigstens axial bzgl. der Verbindungsachse abdichtet und eine Rohseite des Spin-On Filters von einer Reinseite trennen kann.

Die Aufgabe wird ferner durch die erfindungsgemäße Filtervorrichtung nach Anspruch 5 gelöst. Die Filtervorrichtung weist einen Filterkopf auf, welcher einen kopfseitigen Verbindungsteil einer mittels einer Steck- und/oder Drehbewegung bzgl. einer Verbindungsachse schließbaren und lösbaren Verbindungseinrichtung für einen erfindungsgemäßen Spin-On Filter nach einem der Ansprüche 1 bis 4 aufweist.

Vorteilhafterweise kann der Filterkopf wenigstens einen Zulauf und/oder wenigstens einen Ablauf für das Fluid aufweisen.

Die oben im Zusammenhang mit dem erfindungsgemäßen Spin-On Filter und dessen vorteilhaften Ausgestaltungen aufgezeigten Vorteile und Merkmale gelten für die erfindungsgemäße Filtervorrichtung und deren vorteilhafte Ausgestaltungen entsprechend und umgekehrt.

Erfindungsgemäß weist die Verbindungseinrichtung wenigstens eine bzgl. der Verbindungsachse umfangsmäßige Innendichtung auf, welche zwischen dem Filterkopf und dem Spin-On Filter wenigstens axial bzgl. der Verbindungsachse abdichten und eine Rohseite des Spin-On Filters von einer Reinseite trennen kann.

Die Filtervorrichtung ist geeignet zur Filtrierung von Fluid. Insbesondere können Flüssigkeiten, insbesondere Öl oder Kraftstoff damit filtriert werden.

Die Filtervorrichtung kann bei Brennkraftmaschinen von Kraftfahrzeugen eingesetzt werden. Sie kann auch bei andersartigen Brennkraftmaschinen, insbesondere Industriemotoren Verwendung finden. Die Erfindung kann auch außerhalb von Brennkraftmaschinen, insbesondere in der Kraftfahrzeugtechnik, eingesetzt werden.

Die Filtervorrichtung weist einen Filterkopf auf, an dem der Spin-On Filter montiert werden kann. Der Filterkopf kann vorteilhafterweise wenigstens einen Zulauf und/oder wenigstens einen Ablauf für das Fluid aufweisen. Der Filterkopf kann vorzugsweise fest an einem Rahmen fixiert sein. Der Rahmen kann insbesondere Teil der Brennkraftmaschine und/oder des Kraftfahrzeugs sein.

Der Filterkopf weist einen kopfseitigen Verbindungsteil einer Verbindungseinrichtung für den Spin-On Filter auf. Vorteilhafterweise kann der Filterkopf einen ersten Verbindungsteil aufweisen.

Der Spin-On Filter weist einen filterseitigen Verbindungsteil der Verbindungseinrichtung auf. Vorteilhafterweise kann der Spin-On Filter einen zweiten Verbindungsteil aufweisen.

Der zweite Verbindungsteil kann mit dem ersten Verbindungsteil lösbar verbunden werden. Die Verbindungseinrichtung kann mittels einer kombinierten Steckbewegung und Drehbewegung (Steck- und/oder Drehbewegung) bzgl. einer Verbindungsachse schließbar und lösbar sein. Kombinierte Steck-/Drehverbindungen können einfach und schnell geschlossen und geöffnet werden. Ferner sind sie robust gegenüber Zugbelastungen. Mit der erfindungsgemäßen Verbindungseinrichtung kann so einfach ein Schnellverschluss realisiert werden, der einfach und schnell geschlossen und geöffnet werden kann.

Bei einer vorteilhaften Ausführungsform kann die Innendichtung eine Ringdichtung sein.

Bei einer weiteren vorteilhaften Ausführungsform kann die Innendichtung ein rechteckiges Profil haben. Auf diese Weise kann sie auf axial gegenüberliegenden Seiten jeweils flächig an entsprechenden Dichtflächen des Filterkopfs und des Spin-On Filters anliegen. Die Dichtwirkung kann so verbessert werden. Ferner kann so eine Reibung zwischen der Innendichtung und den entsprechenden Dichtflächen vergrößert werden. Die Innendichtung kann so darüber hinaus auch als Aufdrehschutz wirken. Nach dem Verpressen der Innendichtung kann aufgrund der Reibung ein Drehen des Spin-On Filters relativ zum Filterkopf entgegen der Schließdrehrichtung erschwert werden. So kann die Wahrscheinlichkeit verringert werden, dass sich die Verbindungseinrichtung unkontrolliert öffnet.

Alternativ kann die Ringdichtung auch ein rundes oder ein andersartiges eckiges Profil aufweisen. Eine Ausdehnung des Profils kann in axialer Richtung größer sein als in radialer Richtung. Alternativ kann das Profil flach sein.

Die Innendichtung kann vorteilhafterweise zu einer axialen Verspannung der Verbindungseinrichtung beitragen. Auf diese Weise können Vibrationen zwischen dem Spin-On Filter und dem Filterkopf gedämpft werden. Eine etwaige Geräuschentwicklung, insbesondere ein Klappern, kann so verringert werden.

Bei einer weiteren vorteilhaften Ausführungsform kann die Innendichtung koaxial zur Verbindungsachse angeordnet sein. Die axiale Dichtwirkung kann beim Schließen der Verbindungseinrichtung durch eine entsprechende Verpressung axial zur Verbindungsachse verbessert werden.

Bei einerweiteren vorteilhaften Ausführungsform kann die Innendichtung mit dem Spin-On Filterverbunden sein. Sie kann vorteilhafterweise am Spin-On Filter befestigt sein. Sie kann vorteilhafterweise in einer entsprechenden Dichtungsnut am Spin-On Filter angeordnet sein. Auf diese Weise kann sie einfach verliersicher vormontiert werden.

Bei einer weiteren vorteilhaften Ausführungsform kann die Innendichtung an einem Endkörper, insbesondere einer Endscheibe, eines Filterelements, insbesondere eines Rundfilterelements, des Spin-On Filters angeordnet sein.

Bei einer weiteren vorteilhaften Ausführungsform kann die Innendichtung eine Durchlassöffnung zu einem Elementinnenraum eines Filterelements des Spin-On Filters umgeben. Die Innendichtung kann so den Elementinnenraum einfach von einem das Filterelement außen umgebenden Außenraum trennen. Der Elementinnenraum kann sich auf der Reinseite oder der Rohseite des Filterelements befinden. Entsprechend kann die Rohseite oder die Reinseite sich an der Außenseite des Filterelements befinden.

Die Durchlassöffnung kann vorteilhafterweise koaxial zur Verbindungsachse sein. Sie kann vorteilhafterweise mit einem Verbindungskanal verbunden sein. Der Verbindungskanal kann sich vorteilhafterweise wenigstens abschnittsweise koaxial zur Verbindungsachse erstrecken. Der Verbindungskanal kann Teil des Filterkopfs und/oder des kopfseitigen Verbindungsteils sein. Der Verbindungskanal kann vorteilhafterweise mit dem wenigstens einen Zulauf oder dem wenigstens einen Ablauf für das Fluid verbunden sein.

Dies hängt davon ab, ob das Filterelement von radial außen nach radial innen oder umgekehrt durchströmbar ist.

Auf der Seite des Filterkopfs kann vorteilhafterweise eine Dichtfläche für die Innendichtung angeordnet sein. Die Dichtfläche kann vorteilhafterweise koaxial zur Verbindungsachse sein. An der Dichtfläche kann die Innendichtung flächig und/oder umfangsmäßig geschlossen anliegen. Die Dichtfläche kann vorteilhafterweise den Verbindungskanal umgeben.

Bei einer weiteren vorteilhaften Ausführungsform kann die Innendichtung koaxial zu einem Mittelrohr des Spin-On Filters sein. Auf diese Weise kann sich die Innendichtung stabil in axialer Richtung gegen das Mittelrohr abstützen.

Bei einer weiteren vorteilhaften Ausführungsform kann wenigstens ein erster der Verbindungsteile wenigstens zwei bzgl. der Verbindungsachse schraubenartig verlaufende erste Rampenabschnitte aufweisen und der zweite Verbindungsteil kann wenigstens zwei bzgl. der Verbindungsachse schraubenartig verlaufende zweite Rampenabschnitte aufweisen, die zum Schließen der Verbindungseinrichtung aneinander geführt sein können.

Vorteilhafterweise kann der erste Verbindungsteil wenigstens zwei bzgl. der Verbindungsachse schraubenartig verlaufende erste, insbesondere kopfseitige, Rampenabschnitte aufweisen. Der zweite Verbindungsteil kann wenigstens zwei bzgl. der Verbindungsachse schraubenartig verlaufende zweite, insbesondere filterseitige, Rampenabschnitte aufweisen. Durch die Verwendung der schraubenartigen Rampenabschnitte kann eine bauraumoptimierte Verbindungseinrichtung realisiert werden. Dadurch, dass jeder der Verbindungsteile wenigstens zwei jeweilige Rampenabschnitte aufweist, können bei einem Zusammenstecken der Verbindungsteile mit einer Steckbewegung in Richtung der Verbindungsachse die Rampenabschnitte der Verbindungsteile umfangsmäßig an mehreren Stellen aneinander anstoßen. Auf diese Weise können die Verbindungsteile gleichmäßig, insbesondere ohne Verkantung, aneinander gesetzt werden. Bei einer folgenden Drehbewegung um die Verbindungsachse können sich die Rampenabschnitte der Verbindungsteile gegenseitig führen. Auf diese Weise kann ein Schließprozess einfach und genau durchgeführt werden.

Die ersten Rampenabschnitte können sich vorteilhafterweise wenigstens teilumfänglich überlappen. Sie können vorteilhafterweise eine schraubenartig verlaufende erste, insbesondere kopfseitige, Rampennut auf bzgl. der Verbindungsachse axial gegenüberliegenden Seiten begrenzen. Die wenigstens eine erste Rampennut kann vorteilhafterweise ein U-förmiges Profil haben. Auf diese Weise kann sie an drei Seiten, nämlich einer radial äußeren oder inneren Seite und zwei axialen Seiten als Führung für die zweiten Rampenabschnitte dienen. Eine der axialen Seiten kann vorteilhafterweise als Haltefläche, insbesondere kopfseitige Haltefläche, dienen.

Zum Schließen der Verbindungseinrichtung kann wenigstens einer der zweiten Rampenabschnitte wenigstens teilweise in einer der ersten Rampennuten geführt sein. Mithilfe der Zusammenwirkung der Rampenabschnitte mit den Rampennuten kann eine präzise, genaue und stabile Führung in axialer, radialer und Umfangsrichtung beim Schließen der Verbindungseinrichtung erreicht werden. Innerhalb der ersten Rampennuten können die entsprechenden zweiten Rampenabschnitte auch stabil gehalten werden. So kann eine Verbindung realisiert werden, die insbesondere gegenüber Zugkräften axial zur Verbindungsachse sehr belastbar ist.

Mittels der Mehrzahl von Rampenabschnitten an jedem der Verbindungsteile können mehrere schraubenartige Gänge realisiert werden. Die Verbindungseinrichtung kann so mit verhältnismäßig kleinen Drehbewegungen geschlossen werden. Vorteilhafterweise kann die Verbindungseinrichtung mittels einer Drehbewegung um maximal 360° geschlossen werden.

Die Steigungen der schraubenartigen Rampenabschnitte können gleichmäßig, insbesondere konstant, sein. Sie können auch entlang der Rampenabschnitte variieren.

Die ersten Rampenabschnitte können gleichartig sein. Es können aber auch unterschiedliche erste Rampenabschnitte verwendet werden. Entsprechend können die zweiten Rampenabschnitte gleich oder unterschiedlich sein. Die Rampenabschnitte jeweils einer der Verbindungsteile können in gleicher bzgl. der Verbindungsachse axialer Höhe beginnen. Sie können aber auch in unterschiedlichen axialen Höhen beginnen.

Die Verbindungsteile können jeweils aus einem einzigen Material oder einem Materialmix hergestellt sein. Die Verbindungsteile können vorteilhafterweise aus Kunststoff, Aluminium und/oder Blech sein oder ein derartiges Material aufweisen. Die beiden Verbindungsteile können aus dem gleichen Material oder unterschiedlichen Materialien sein.

Der Spin-On Filter kann vorteilhafterweise einen runden Querschnitt haben. Der Spin-On Filter kann vorteilhafterweise koaxial zu einer Filterachse sein. Die Filterachse kann vorteilhafterweise mit der Verbindungsachse zusammenfallen. Der Spin-On Filter kann vorteilhafterweise ein Filterelement aufweisen. Das Filterelement kann vorteilhafterweise ein umfangsmäßig geschlossenes Filtermedium aufweisen. Das Filtermedium kann vorteilhafterweise sternförmig oder zickzackförmig gefaltet sein. Das Filtermedium kann vorteilhafterweise an wenigstens einer Stirnseite mit einem Endkörper, insbesondere einer Endscheibe, dicht verbunden sein. Das Filterelement kann vorteilhafterweise koaxial zur Filterachse sein. Das Filterelement kann vorteilhafterweise einen Stützkörper aufweisen. Der Stützkörper kann vorteilhafterweise ein Mittelrohr sein. Das Mittelrohr kann sich vorteilhafterweise in einem Elementinnenraum des Filterelements befinden. Das Mittelrohr kann sich zwischen den Endkörpern erstrecken.

Vorteilhafterweise kann der filterseitige, insbesondere zweite, Verbindungsteil ein tragendes und/oder stützendes Teil des Spin-On Filters, insbesondere eines Gehäuses des Spin-On Filters, sein.

Vorteilhafterweise kann der filterseitige, insbesondere zweite, Verbindungsteil mit einem Deckelteil, insbesondere einem Anschlusskörper, zum Verschließen des Gehäuses des Spin-On Filters ausgebildet sein. Der filterseitige Verbindungsteil kann vorteilhafterweise einstückig mit dem Deckelteil verbunden sein. Auf diese Weise kann ein Aufwand an Bauteilen verringert werden. Das Deckelteil kann vorteilhafterweise wenigstens einen Durchlass, insbesondere einen Einlass und/oder einen Auslass, für das Fluid in den Spin-On Filter oder aus diesem heraus aufweisen. Das Deckelteil kann vorteilhafterweise mittels eines Fixierelements an einem weiteren Gehäuseteil, insbesondere einem Filtertopf, des Spin-On Filters fixiert sein. Das Fixierelement kann vorteilhafterweise einen Blechring aufweisen, welcher mit dem weiteren Gehäuseteil verbunden werden kann. Der Blechring kann vorteilhafterweise mittels einer Bördelverbindung mit dem weiteren Gehäuseteil verbunden sein.

Vorteilhafterweise kann die Verbindungseinrichtung wenigstens einen Anschlag aufweisen. Mit dem wenigstens einen Anschlag kann verhindert werden, dass die Verbindungsrichtung bei der Steck- und/oder Drehbewegung über ihre Schließposition hinweg bewegt werden kann. Auf diese Weise kann die Schließposition präzise definiert werden. Wenigstens einer der Anschläge kann sich am Ende einer der Rampennuten befinden. So kann der in der entsprechenden Rampennut geführte Rampenabschnitt mit seinem entsprechend zugewandten Ende an dem Anschlag anstoßen und so ein Weiterdrehen verhindern.

Vorteilhafterweise können beide Verbindungsteile jeweils wenigstens zwei bzgl. der Verbindungsachse schraubenartig verlaufende Rampenabschnitte aufweisen. Die Rampenabschnitte desselben Verbindungsteils können sich bzgl. der Verbindungsachse wenigstens teilumfänglich überlappen. Die Rampenabschnitte desselben Verbindungsteils können jeweils eine schraubenartig verlaufende Rampennut auf bzgl. der Verbindungsachse axial gegenüberliegenden Seiten begrenzen. Zum Schließen der Verbindungseinrichtung kann von jedem der Verbindungsteile jeweils wenigstens einer der Rampenabschnitte wenigstens teilweise in einer der Rampennuten des jeweils anderen Verbindungsteils geführt sein.

Vorteilhafterweise kann sich die Verbindungseinrichtung zwischen einer Rohseite und einer Reinseite eines Filterelements des Spin-On Filters befinden. Die Verbindungseinrichtung kann so vorteilhafterweise innerhalb einer Außenabdichtung angeordnet sein, welche den fluidführenden Raum der Filtervorrichtung zur Umgebung hin abdichten kann. Eine Haltefunktion/Verbindungsfunktion der Verbindungseinrichtung und eine Dichtfunktion zwischen dem fluidführenden Raum der Filtervorrichtung und der Umgebung können so voneinander getrennt werden. So können die Haltefunktion/Verbindungsfunktion und die Dichtfunktion jeweils, insbesondere unabhängig voneinander, optimiert werden.

Vorteilhafterweise kann wenigstens eine der ersten Rampenabschnitte außerhalb der entsprechenden ersten Rampennut eine Einführrampenfläche aufweisen, welche in die entsprechende erste Rampennut übergehen kann. Die Einführrampenfläche kann als Einführhilfe dienen, um eine genaue Einführung der jeweils zweiten Rampenabschnitte in die entsprechenden Rampennuten zu erreichen.

Vorteilhafterweise kann der wenigstens eine erste Rampenabschnitt mit der Einführrampenfläche auf Seiten des Filterkopfs sein. Der wenigstens eine zweite Rampenabschnitt auf Seiten des Spin-On Filters, insbesondere Spin-On Filters, kann vorteilhafterweise auf einer der Haltefläche axial gegenüberliegenden Seite eine Zuführrampe für die entsprechende Einführrampenfläche des wenigstens einen ersten Rampenabschnitts aufweisen.

Wenigstens eine der Einführrampenflächen kann vorteilhafterweise bzgl. der Verbindungsachse schraubenartig verlaufen. Auf diese Weise kann eine Führung der entsprechenden zweiten Rampenabschnitte bei der Steck- und/oder Drehbewegung zum Schließen/Öffnen der Verbindungseinrichtung verbessert werden.

Vorteilhafterweise kann die wenigstens eine Einführrampenfläche stufenlos in die entsprechende Rampennut übergehen. Auf diese Weise kann eine gleichmäßige Führung erreicht werden.

Vorteilhafterweise kann die wenigstens eine Einführrampenfläche auf der dem zweiten Verbindungsteil axial zugewandten Seite des wenigstens einen ersten Rampenabschnitts angeordnet sein.

Vorteilhafterweise können wenigstens zwei der ersten Rampenabschnitte umfangsmäßig wenigstens abschnittsweise versetzt zueinander sein. Auf diese Weise können die zweiten Rampenabschnitte beim Zusammenstecken der Verbindungsteile in jeder Drehorientierung des Spin-On Filters bzgl. des Filterkopfs jeweils an einer entsprechenden Einführrampenfläche angelegt werden. So kann in jeder Drehposition des Spin-On Filters relativ zum Filterkopf eine Führung der Rampenabschnitte erreicht werden.

Vorteilhafterweise kann wenigstens einer der ersten Rampenabschnitte sich bzgl. der Verbindungsachse nur über einen Teil des Umfangs erstrecken. Auf diese Weise kann die Verbindungseinrichtung mit einer Drehung des Spin-On Filters um maximal 360° relativ zum Filterkopf geschlossen oder geöffnet werden. Auf diese Weise kann die Verbindungseinrichtung schnell geöffnet und geschlossen werden.

Vorteilhafterweise können wenigstens die ersten Rampenabschnitte sich jeweils über einen gleichen Umfangswinkel erstrecken. Die Verbindungseinrichtung kann so eine Symmetrie bzgl. der Verbindungsachse aufweisen. Auf diese Weise kann der Spin-On Filter in mehreren Drehorientierungen am Filterkopf montiert werden. Beim Schließen der Verbindungseinrichtung kann einfacher eine Startposition gefunden werden, von der aus ein kontrollierter Verschluss der Verbindungseinrichtung möglich ist. Auf diese Weise kann der Anbau des Spin-On Filters vereinfacht werden.

Vorteilhafterweise kann ein Umfangswinkel, über den sich jede der Rampennuten umfangsmäßig erstreckt, etwa einem Winkel von 360° geteilt durch die Anzahl der ersten Rampenabschnitte entsprechen. So kann die Symmetrie der Verbindungseinrichtung verbessert werden. Die Montage des Spin-On Filters kann weiter vereinfacht werden. Ferner kann so die umfangsmäßige Ausdehnung der Rampennuten im Verhältnis zur Gesamtbaugröße der Verbindungseinrichtung optimiert werden. Die Verbindungseinrichtung kann so insgesamt vereinfacht werden. Ferner kann die Führung und das Halten der entsprechenden zweiten Rampenabschnitte bei dem Zusammenbau der Verbindungseinrichtung verbessert werden.

Vorteilhafterweise können jeweils drei erste, insbesondere kopfseitige, Rampenabschnitte vorgesehen sein. Vorteilhafterweise können jeweils drei zweite, insbesondere filterseitige, Rampenabschnitte vorgesehen sein. Mit drei Rampenabschnitten kann der zweite Verbindungsteil einfach und präzise angelegt, geführt und gehalten werden.

Die zweiten Rampenabschnitte können sich vorteilhafterweise jeweils über den gleichen Umfangswinkel wie die Rampennuten erstrecken. Auf diese Weise können die zweiten Rampenabschnitte jeweils vollständig in die entsprechenden Rampennuten eintauchen. Die Rampennuten können über ihre gesamte umfangsmäßige Ausdehnung mit den zweiten Rampenabschnitten eine Kraftübertragung realisieren. Auf diese Weise kann die mechanische Belastbarkeit der Verbindungseinrichtung verbessert werden.

Bei der Verwendung von drei ersten Rampenabschnitten können sich die entsprechenden Rampennuten vorteilhafterweise jeweils über einen Umfangswinkel von etwa zwischen 100° und 140°, vorzugsweise 120°, erstrecken. Die Rampennuten können so insgesamt den gesamten Umfang umgreifen. Auf diese Weise können die Verbindungsteile entlang des kompletten Umfangs verbunden werden.

Vorteilhafterweise kann ein Umfangswinkel, über den sich jede der Einführrampenflächen erstreckt, etwa einen Winkel von 360°, geteilt durch die Anzahl der ersten Rampenabschnitte entsprechen. Vorteilhafterweise können sich die zweiten Rampenabschnitte jeweils über den gleichen Umfangswinkel erstrecken, wie die Einführrampenflächen der ersten Rampenabschnitte. So können die zweiten Rampenabschnitte jeweils gleichmäßig und präzise an die entsprechenden Einführrampenflächen angelegt und dort geführt werden.

Bei der Verwendung von drei ersten Rampenabschnitten können sich vorteilhafterweise die drei zweiten Rampenabschnitte jeweils über einen Umfangswinkel von etwa zwischen 100° und 140°, vorzugsweise 120°, erstrecken.

Vorteilhafterweise können die ersten Rampenabschnitte umfangsmäßig hälftig jeweils die Einführrampenfläche und hälftig die Rampennut begrenzen. Auf diese Weise können die zweiten Rampenabschnitte an den Einführrampenflächen gleichmäßig anliegen und geführt werden. Ferner können die zweiten Rampenabschnitte in den Rampennuten etwa über ihre gesamte umfangsmäßige Erstreckung hälftig gehalten werden. So kann eine stabile, insbesondere zugstabile, Verbindung erreicht werden.

Bei einer Verbindungseinrichtung mit jeweils drei Rampenabschnitten auf der Kopfseite und auf der Filterseite kann eine sehr große Tragfläche realisiert werden. Auf diese Weise können hohe mechanische Belastungen, insbesondere Zugbelastungen, kompensiert werden.

Vorteilhafterweise können die Rampennuten sich bzgl. der Verbindungsachse umfangsmäßig aneinander anschließen. Die Rampennuten können so bzgl. der Drehbewegung zum Schließen/Öffnen der Verbindungseinrichtung hintereinander angeordnet sein. Die Rampennuten können ohne umfangsmäßige Überlappung angeordnet sein. So können die Rampennuten platzsparend an den Umfangseiten des ersten Verbindungsteils verlaufen.

Vorteilhafterweise können sich ggf. die Einführrampenflächen bzgl. der Verbindungsachse umfangsmäßig aneinander anschließen. Die Einführrampenflächen können ohne umfangsmäßige Überlappung angeordnet sein.

Bei einer weiteren vorteilhaften Ausführungsform kann die Verbindungseinrichtung wenigstens eine Verriegelungseinrichtung aufweisen mit wenigstens einem kopfseitigen Verriegelungsteil und wenigstens einen filterseitigen Verriegelungsteil, die in der Schließposition der Verbindungseinrichtung miteinander eine entriegelbare Verbindung eingehen können. Auf diese Weise kann die geschlossene Verbindungseinrichtung zumindest in ihrem Schließzustand mechanisch gesichert werden. So kann verhindert werden, dass die Verbindungseinrichtung sich unkontrolliert öffnen kann. Das Schließen und/oder das Öffnen der entriegelbaren Verbindung kann vorteilhafterweise ohne den Einsatz eines separaten Werkzeuge möglich sein.

Die entriegelbare Verbindung kann vorteilhafterweise eine Rastverbindung sein. Eine Rastverbindung kann einfach geschlossen und geöffnet werden. Die Rastverbindung kann vorteilhafterweise einen mechanischen Widerstand realisieren, der zum Öffnen der entriegelbaren Verbindung überwunden werden muss. Auf diese Weise kann verhindert werden, dass sich die entriegelbare Verbindung unkontrolliert öffnet.

Die entriegelbare Verbindung, insbesondere Rastverbindung, kann beim Verriegeln vorteilhafterweise ein insbesondere akustisch und/oder taktil erfassbares Signal erzeugen. Auf diese Weise kann der Schließzustand der Verbindungseinrichtung einfach erfasst werden.

Wenigstens eines der Verriegelungsteile, insbesondere wenigstens eines der filterseitigen Verriegelungsteile, kann vorteilhafterweise einen Federarm aufweisen. Der Federarm kann vorteilhafterweise bzgl. der Verbindungsachse federnd nach radial außen und/oder radial innen gebogen werden. An einem freien Ende des Federarms kann vorteilhafterweise eine Rastnase oder eine Rastaufnahme angeordnet sein. Das wenigstens eine entsprechende andere Verriegelungsteil, insbesondere wenigstens eines der kopfseitigen Verriegelungsteile, kann vorteilhafterweise entsprechend eine Rastaufnahme oder eine Rastnase aufweisen. Die Rastaufnahme oder die Rastnase des Federarms kann in der Verriegelungsposition der entriegelbaren Verbindung vorteilhafterweise mit der Rastnase oder Rastaufnahme des anderen Verriegelungsteils verrasten.

Das wenigstens eine andere Verriegelungsteil kann vorteilhafterweise eine Führungsfläche aufweisen. Die Führungsfläche kann sich rampenartig in axialer Richtung erhöhen. Am Ende der Führungsfläche kann sich ggf. die Rastaufnahme oder Rastnase befinden. Bei der Drehbewegung zum Schließen der Verbindungseinrichtung kann der Federarm des einen Verriegelungsteils, insbesondere ggf. die Rastnase, an der Führungsfläche des anderen Verriegelungsteils geführt werden.

Der wenigstens eine Federarm kann vorteilhafterweise auf Seiten des Spin-On Filters angeordnet sein. Auf diese Weise kann der Federarm gemeinsam mit dem Spin-On Filter ausgetauscht werden. So können Ermüdungserscheinungen an dem beweglichen Federarm, die durch mehrmaliges Öffnen und Schließen der Verbindungseinrichtung auftreten können, vermieden werden. Das andere Verriegelungsteil kann vorteilhafterweise auf Seiten des Filterkopfs angeordnet sein.

Der Federarm des einen Verbindungsteils kann sich vorteilhafterweise entgegen einer Schließdrehrichtung des Spin-On Filters relativ zum Filterkopf erstrecken.

Der Federarm kann vorteilhafterweise eine Vorspannung aufweisen, die bzgl. der Verbindungsachse nach radial innen gerichtet ist. Das andere Verriegelungsteil kann vorteilhafterweise an einer bzgl. der Verbindungsachse radial äußeren Umfangsseite des entsprechenden Verbindungsteils angeordnet sein.

Die entriegelbare Verbindung kann sich vorteilhafterweise außerhalb eines Innenraums des Spin-On Filters befinden. Sie kann sich vorteilhafterweise an der Außenseite eines Deckelkörpers, insbesondere Filterdeckels, des Spin-On Filters befinden. Sie kann bei dem vom Filterkopf getrennten Spin-On Filter von außen sichtbar sein. So kann vor der Montage des Spin-On Filters erkannt werden, ob das wenigstens eine filterseitige Verriegelungsteil, insbesondere der Federarm, funktionsfähig, insbesondere unbeschädigt, ist. Das wenigstens eine filterseitige Verriegelungsteil, insbesondere der wenigstens eine Federarm, kann vorteilhafterweise den Deckelkörper in axialer Richtung überragen. Das filterseitige Verriegelungsteil kann sich vorteilhafterweise in umfangsmäßiger Verlängerung von umfangsmäßig verlaufenden Stegen befinden. Auf diese Weise kann das filterseitige Verriegelungsteil geschützt werden.

Vorteilhafterweise kann das wenigstens eine filterseitige Verriegelungsteil eine insbesondere elastisch bewegbare, insbesondere verformbare, Nase, insbesondere eine Rastnase, aufweisen.

Das wenigstens eine filterseitige Verriegelungsteil kann vorteilhafterweise als eine radial elastisch verformbare Nase ausgebildet sein.

Vorteilhafterweise kann das wenigstens eine filterseitige Verriegelungsteil an dem Anschlusskörper, insbesondere an der dem Filterkopf zugewandten Seite, angeordnet sein.

Das wenigstens eine filterseitige Verriegelungsteil kann vorteilhafterweise an der dem Filterkopf zugewandten Seite der Anschlussplatte angeordnet sein.

Vorteilhafterweise können mehrere filterseitige Verriegelungsteile bzgl. der Verbindungsachse umfangsmäßig, insbesondere gleichmäßig, verteilt angeordnet sein.

Bei einer weiteren vorteilhaften Ausführungsform kann die Verbindungseinrichtung wenigstens eine bzgl. der Verbindungsachse umfangsmäßige Außendichtung aufweisen, welche zwischen dem Filterkopf und dem Spin-On Filter wenigstens radial bzgl. der Verbindungsachse abdichten und einen fluidführenden Raum der Filtervorrichtung von der Umgebung trennen kann. Mit der Außendichtung können die fluidführenden Räume, insbesondere Räume zwischen dem Spin-On Filter und dem Filterkopf, von der Umgebung dicht getrennt werden. Dabei kann sich die Außendichtung auf der Rohseite oder der Reinseite des Filterelements des Spin-On Filters befinden. Dies hängt von der Strömungsrichtung des Fluids durch den Spin-On Filter ab.

Die Außendichtung kann bzgl. der Verbindungsachse in radialer Richtung abdichten. Auf diese Weise kann eine etwaige Kompression der Außendichtung im Wesentlichen unabhängig von einem Schließgrad der Verbindungseinrichtung sein. Eine mechanische Belastung auf die Außendichtung kann so verringert werden.

Die Außendichtung kann vorteilhafterweise eine O-Ring-Dichtung sein. Alternativ kann eine eckige, insbesondere flache, Dichtung verwendet werden. Eine O-Ring-Dichtung hat den Vorteil, dass sie bei einer Steckbewegung in Richtung der Verbindungsachse einfacher an den entsprechenden radial inneren und/oder radial äußeren Dichtflächen abrollen kann. Mit der O-Ring-Dichtung kann die radiale Dichtwirkung besser definiert und/oder eingestellt werden, als mit einer Flachdichtung.

Vorteilhafterweise kann die Außendichtung auf der Seite des Spin-On Filters befestigt sein. Sie kann vorteilhafterweise radial innen an einer entsprechenden Fläche des Spin-On Filters anliegen. Alternativ kann sie auch radial außen an einer entsprechenden Fläche des Spin-On Filters anliegen.

Auf Seiten des Filterkopfs kann vorteilhafterweise eine entsprechende Dichtfläche angeordnet sein, mit der die Außendichtung dichtend zusammenwirken kann. Die Dichtfläche kann sich dabei radial außerhalb oder innerhalb der Außendichtung befinden. Die Dichtfläche kann vorteilhafterweise an einem entsprechenden Außendichtabschnitts auf Seiten des Filterkopfs angeordnet sein. Der Außendichtabschnitt kann vorteilhafterweise zylindrisch sein. Der Außendichtabschnitt kann vorteilhafterweise koaxial zur Verbindungsachse sein. Ein Durchmesser der Dichtfläche auf der der Außendichtung zugewandten Seite kann sich in axialer Richtung zu der Stirnseite hin, von der die Außendichtung beim Verbinden der Verbindungseinrichtung auf die Dichtfläche zu bewegt wird, aufweiten. Auf diese Weise kann ein Einführen oder Aufstecken der Außendichtung auf die Dichtfläche vereinfacht werden. Ferner kann die Außendichtung während dem Schließprozess der Verbindungseinrichtung kontinuierlich, insbesondere gleichmäßig, komprimiert werden.

Die Außendichtung kann vorteilhafterweise in einer Dichtungsaufnahme angeordnet sein. Die Dichtungsaufnahme kann sich vorteilhafterweise auf der Seite des Spin-On Filters befindet. Die Dichtungsaufnahme kann vorteilhafterweise eine Dichtungsnut sein. Die Dichtungsnut kann vorteilhafterweise nach radial außen oder nach radial innen offen sein. Die Dichtungsnut kann vorteilhafterweise an einen Deckelelement des Spin-On Filters angeordnet sein. Das Deckelelement kann vorteilhafterweise ringförmig sein. Vorteilhafterweise kann das Deckelelement ein Blechring sein. Die Dichtungsnut kann vorteilhafterweise durch Bördeln des Blechrings realisiert sein. Das Deckelelement kann vorteilhafterweise mit einem Gehäuseelement, insbesondere einem Gehäusetopf, des Spin-On Filters, insbesondere mittels einer Bördelung, verbunden sein.

Auf der der offenen Seite der Dichtungsnut zugewandten Seite kann das Deckelelement eine Aufnahme, insbesondere Ringnut, für den Außendichtabschnitt des Filterkopfs aufweisen.

Die Außendichtung kann zusätzlich oder alternativ auch axial abdichten.

Vorteilhafterweise kann ein Verlauf der Rampenabschnitte so an eine Anordnung einer bzgl. der Verbindungsachse umfangsmäßigen Außendichtung der Verbindungseinrichtung angepasst sein, dass die Außendichtung beim Schließen der Verbindungseinrichtung mittels einer Steck- und/oder Drehbewegung während einer frühen Schließphase, insbesondere in der sich die zweiten Rampenabschnitte in einem jeweiligen Anfangsbereich der Rampennuten befinden, sich axial außerhalb eines von zwei Dichtabschnitten, insbesondere eines zylindrischen Außendichtabschnitts, befindet, zwischen denen sie in der Schließposition der Verbindungseinrichtung in radialer Richtung abdichtet, und während einer späteren Schließphase, in der die zweiten Rampenabschnitte insbesondere in einem jeweiligen Endbereich der Rampennuten eingreifen, zwischen den beiden Dichtabschnitten verpresst ist. Auf diese Weise kann die Außendichtung in der Schließphase, in der sich die Rampenabschnitte außerhalb oder in dem Anfangsbereich der Rampennuten befinden, entlastet sein. Eine Belastung, insbesondere Kompression, der Außendichtung erfolgt erst in der späteren Schließphase, in der die Rampenabschnitte in die jeweiligen Rampennuten, insbesondere in deren Endbereiche, eingreifen. Auf diese Weise kann eine umfangsmäßige Bewegung, insbesondere ein Reiben der Außendichtung, zwischen den Dichtabschnitten, insbesondere dem kopfseitigen Außendichtabschnitt und der filterseitigen Dichtungsnut, minimiert werden. Die mechanische Belastung der Außendichtung, insbesondere der Verschleiß, kann so verringert werden. Vorteilhafterweise können die Steigungen und/oder die entsprechenden umfangsmäßigen Ausdehnungen der Rampennuten und/oder ggf. der Einführrampenflächen an die Anordnung, insbesondere Position, der Außendichtung angepasst sein.

Vorteilhafterweise kann die frühere Schließphase mit dem Eintritt der zweiten Rampenabschnitte in die Rampennuten erfolgen. Ein erster Drehwinkel bei der Drehung des Spin-On Filters relativ zum Filterkopf zwischen dem Eintritt der zweiten Rampenabschnitte in die Rampennuten und dem Übergang von der frühen Schließphase zur späten Schließphase kann vorteilhafterweise etwa einem zweiten Drehwinkel zwischen dem Übergang der früheren Schließphase zur späteren Schließphase und dem Abschluss der späteren Schließphase entsprechen.

Bei der Verwendung von drei Rampenabschnitten kann vorteilhafterweise die Kompression der Außendichtung nach dem Eintritt der zweiten Rampenabschnitte in die Rampennuten nach einer Drehung des Spin-On Filters um etwa 60° beginnen. Nach dem Drehen des Spin-On Filters um weitere 60° kann die Außendichtung vollständig verpresst werden.

Die Aufgabe wird außerdem durch den Filterkopf nach Anspruch 13 gelöst. Der Filterkopf weist einen kopfseitigen Verbindungsteil einer mittels einer Steck- und/oder Drehbewegung bzgl. einer Verbindungsachse schließbaren und lösbaren Verbindungseinrichtung für einen Spin-On Filter, insbesondere einen erfindungsgemäßen Spin-On Filter, auf, wobei ein filterseitiges Verbindungsteil der Verbindungseinrichtung am Spin-On Filter mittels einer Steck- und/oder Drehbewegung bzgl. der Verbindungsachse mit einem Anschlussstutzen des kopfseitigen Verbindungsteils des Filterkopfs lösbar verbindbar ist, und wobei ein kopfseitige Fluidstutzen eine umlaufende Dichtfläche aufweist, an welcher eine Innendichtung, welche eine um einen mittigen Fluidkanal des Spin-On Filters umlaufende und axial gegenüber dem filterseitigen Verbindungsteil zu dem Filterelement hin versetzte Dichtungsfläche aufweist, dichtend anlegbar ist, um eine Rohseite von einer Reinseite des Spin-On Filters zu trennen

Die oben im Zusammenhang mit dem erfindungsgemäßen Spin-On Filter und der erfindungsgemäßen Filtervorrichtung und deren vorteilhaften Ausgestaltungen aufgezeigten Vorteile und Merkmale gelten für den erfindungsgemäßen Filterkopf und dessen vorteilhafte Ausgestaltungen entsprechend und umgekehrt.

### Kurze Beschreibung der Zeichnungen

Weitere Vorteile, Merkmale und Einzelheiten der Erfindung ergeben sich aus der nachfolgenden Beschreibung, in der ein Ausführungsbeispiel der Erfindung anhand der Zeichnung näher erläutert wird. Der Fachmann wird die in der Zeichnung, der Beschreibung und den Ansprüchen in Kombination offenbarten Merkmale zweckmäßigerweise auch einzeln betrachten und zu sinnvollen weiteren Kombinationen zusammenfassen. Es zeigen schematisch
- Figur 1: einen Längsschnitt eines Filtersystems für Motoröl einer Brennkraftmaschine eines Kraftfahrzeugs mit einem Filterkopf, an dem ein Spin-On Filter mittels einer lösbaren Verbindungseinrichtung befestigt ist;
- Figur 2: eine Detailansicht eines anderen Längsschnitts des Filtersystems aus der Figur 1 im Bereich der Verbindungseinrichtung;
- Figur 3: eine isometrische Darstellung des Filterkopfs aus den Figuren 1 und 2 ohne den Spin-On Filter, mit Blick auf die Verbindungsseite;
- Figur 4: eine Draufsicht auf die Verbindungsseite des Filterkopfs aus den Figuren 1 bis 3, ohne Spin-On Filter;
- Figur 5: eine isometrische Darstellung des Spin-On Filters aus den Figuren 1 und 2, mit Blick auf die Verbindungsseite;
- Figur 6: eine Draufsicht auf die Verbindungsseite des Spin-On Filters aus den Figuren 1, 2 und 5.

In den Figuren sind gleiche Bauteile mit gleichen Bezugszeichen versehen.

### Ausführungsform(en) der Erfindung

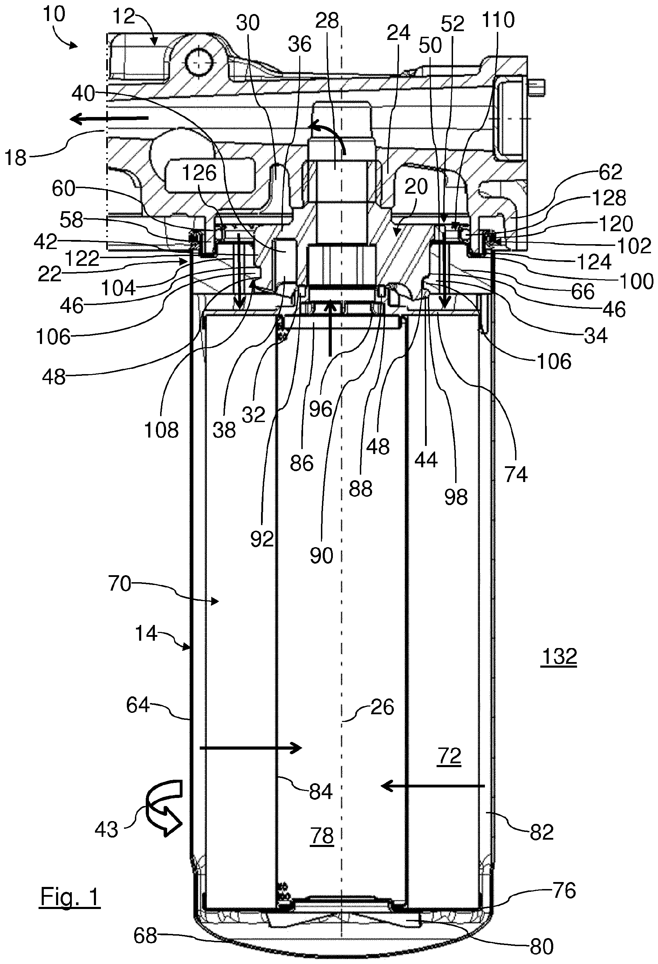

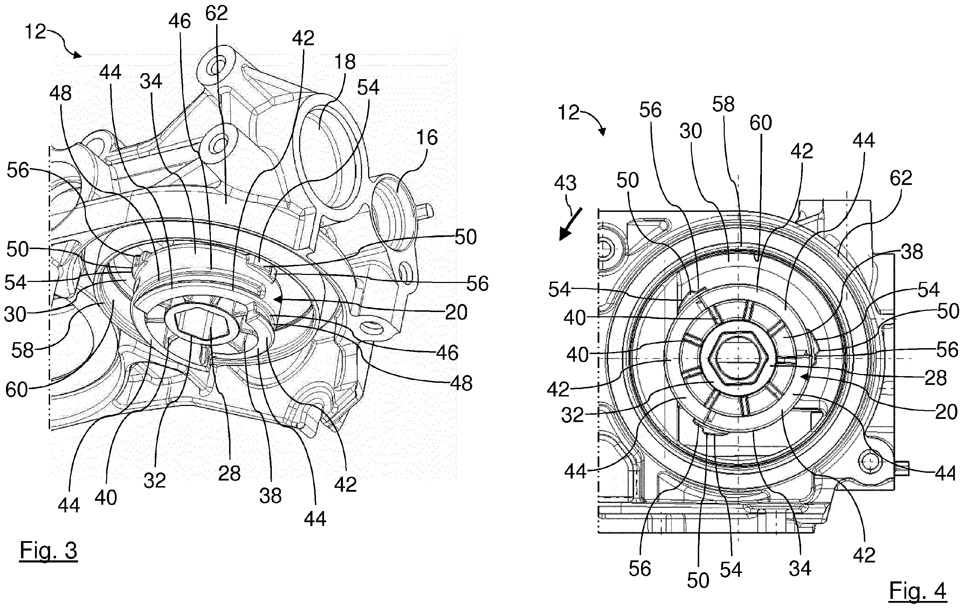

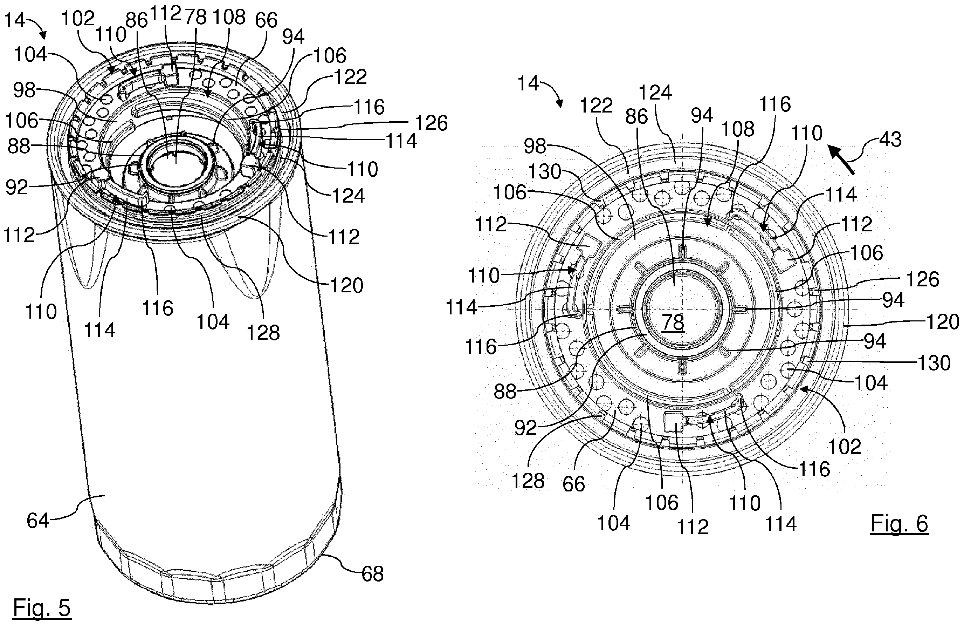

In den Figuren 1 bis 6 ist ein Filtersystem 10 für Motoröl einer Brennkraftmaschine eines Kraftfahrzeugs in unterschiedlichen Perspektiven, Schnitten und Detailansichten gezeigt.

Das Filtersystem 10 umfasst einen Filterkopf 12, an dem ein Spin-On Filter 14 lösbar befestigt ist. Der Filterkopf 12 ist aus Metall. Der Filterkopf 12 ist fest mit der Brennkraftmaschine verbunden und dient als Anschlussteil für den Spin-On Filter 14. Der Filterkopf 12 umfasst einen Einlass 16 und einen Auslass 18 für das Motoröl. Der Einlass 16 und der Auslass 18 sind mit hier nicht weiter interessierender Weise mit entsprechenden Ölleitungen der Brennkraftmaschine verbunden.

Ferner verfügt der Filterkopf 12 über einen kopfseitigen Verbindungsteil 20 einer insgesamt mit 22 bezeichneten, lösbaren Verbindungseinrichtung zum Verbinden des Spin-On Filters 14 mit dem Filterkopf 12. Der kopfseitige Verbindungsteil 20 ist aus Metall. Die dem Spin-On Filter 14 zugewandte Seite des kopfseitigen Verbindungsteils 20 hat die Form und Funktion eines Anschlussstutzens. Der kopfseitige Verbindungsteil 20 ist in einen hohlen Anschlusszylinder 24 geschraubt, welcher einstückig mit dem Filterkopf 12 verbunden ist. Der Anschlusszylinder 24 weist ein Innengewinde auf. Der Anschlusszylinder 24 ist koaxial zu einer Filterachse 26. Der kopfseitige Verbindungsteil 20 kann statt als separates Bauteil an den Filterkopf 12 geschraubt auch einstückig mit diesem verbunden sein.

Wenn im Folgenden von "axial", "radial", "koaxial" oder "umfangsmäßig" die Rede ist, so bezieht sich dies, sofern nicht anders erwähnt, auf die Filterachse 26.

Der kopfseitige Verbindungsteil 20 weist einen zylindrischen Anschlusshülsenabschnitt 28 mit einem zu dem Innengewinde des Anschlusszylinders 24 passenden Außengewinde auf. Bei angebautem Spin-On Filter 14 ist der Anschlusshülsenabschnitt 28 ebenfalls koaxial zur Filterachse 26.

Ein Innenraum des Anschlusshülsenabschnitts 28 ist mit dem Auslass 18 des Filterkopfs 12 verbunden. An seiner radial inneren Umfangsseite ist der Anschlusshülsenabschnitt 28 einfach abgestuft. Der Innenquerschnitt des Anschlusshülsenabschnitts 28 auf der erweiterten dem Spin-On Filter 14 zugewandten Seite ist etwa sechseckig. Wobei die Ecken leicht abgerundet sind. Der Innenquerschnitt eines gedachten Inkreises auf der Seite des Auslasses 18 ist kleiner als der Innenquerschnitt des Anschlusshülsenabschnitts 28 auf der dem Spin-On Filter 14 zugewandten Seite.

Der Anschlusszylinder 24 ist radial außen von einem Einlassringraum 30 des Filterkopfs 12 umgeben.

Eine dem Spin-On Filter 14 zugewandte Stirnseite des Anschlusshülsenabschnitts 28 bildet eine ringförmige koaxiale Dichtfläche 32.

Der Anschlusshülsenabschnitt 28 des kopfseitigen Verbindungsteils 20 ist radial außen von einem Außenzylinderabschnitt 34 umgeben. Die Umfangswand des Außenzylinderabschnitts 34 hat etwa die Form eines hohlen Kreiszylinders. Der Außenzylinderabschnitt 34 ist koaxial zur Filterachse 26. Er erstreckt sich in axialer Richtung etwa von der axialen Mittelebene des Anschlusshülsenabschnitts 28 in Richtung auf die dem Spin-On Filter 14 zugewandte Stirnseite des Anschlusshülsenabschnitts 28 zu. Auf seiner dem Filterkopf 12 zugewandten Seite ist der Außenzylinderabschnitt 34 über einen radialen Ringscheibenabschnitt 36 einstückig mit der radial äußeren Umfangsseite des Anschlusshülsenabschnitts 28 verbunden.

In einem Ringraum 38 zwischen der radial inneren Umfangsseite des Außenzylinderabschnitts 34 und der radial äußeren Umfangsseite des Anschlusshülsenabschnitts 28 ist eine Mehrzahl von Radialverbindungswänden 40 angeordnet. Die Radialverbindungswände 40 sind jeweils einstückig radial außen mit dem Außenzylinderabschnitt 34, radial innen mit dem Anschlusshülsenabschnitt 28 und mit einer Unterseite des radialen Ringscheibenabschnittes 36 verbunden. Die Radialverbindungswände 40 erstrecken sich jeweils radial und axial. Sie sind in Richtung der Filterachse 26 betrachtet etwa sternförmig angeordnet.

An der radial äußeren Umfangsseite des Außenzylinderabschnitts 34 sind insgesamt drei kopfseitige Rampenabschnitte 42 angeordnet. Die kopfseitigen Rampenabschnitte 42 sind bzgl. ihrer Ausdehnungen und Form identisch. Die kopfseitigen Rampenabschnitte 42 verlaufen jeweils bzgl. der Filterachse 26 schraubenartig. Eine Steigungsrichtung der kopfseitigen Rampenabschnitte 42 entspricht einem bekannten Rechtsgewinde.

Eine Schließdrehrichtung 43 des Spin-On Filters 14 relativ zum Filterkopf 12, welche in den Figuren 1, 2, 4 und 6 durch einen Pfeil angedeutet ist, zum Schließen der Verbindungseinrichtung 22 entspricht der eines bekannten Rechtsgewindes. Die Schließdrehrichtung 43 verläuft vom Spin-On Filter 14 auf den Filterkopf 12 in axialer Richtung betrachtet im Uhrzeigersinn.

Die kopfseitigen Rampenabschnitte 42 erstrecken sich jeweils etwa über einen Umfangswinkel von 240°. Die kopfseitigen Rampenabschnitte 42 sind zueinander versetzt angeordnet. Jeweils zwei der kopfseitigen Rampenabschnitte 42 überlappen sich jeweils über die Hälfte ihrer umfangsmäßigen Ausdehnungen. Die Anfänge der kopfseitigen Rampenabschnitte 42 befinden sich jeweils auf der dem Spin-On Filter 14 zugewandten freien Stirnseite des Außenzylinderabschnitts 34. Die Enden der kopfseitigen Rampenabschnitte 42 sind umfangsmäßig jeweils dort, wo der entgegen der Schließdrehrichtung 43 betrachtet übernächste kopfseitige Rampenabschnitt 42 beginnt.

Jeder kopfseitige Rampenabschnitt 42 besteht umfangsmäßig betrachtet aus zwei Bereichen. Ein erster Bereich mit einer jeweiligen Einführrampenfläche 44 erstreckt sich umfangsmäßig vom Anfang eines jeweiligen kopfseitigen Rampenabschnitts 42 bis zum Anfang des entgegen der Schließdrehrichtung 43 betrachtet jeweils nächsten kopfseitigen Rampenabschnitts 42. Die Einführrampenflächen 44 sind von dem Spin-On Filter 14 aus betrachtet in axialer Richtung frei zugänglich. Sie erstrecken sich jeweils in radialer Richtung und schraubenartig in Umfangsrichtung. Die Einführrampenflächen 44 erstrecken sich jeweils in radialer Richtung über die gesamte radiale Wanddicke des Außenzylinderabschnitts 34.

An die jeweilige Einführrampenfläche 44 schließt sich jeweils ein Bereich mit einer Nutrampenfläche 46 an. Die umfangsmäßige Erstreckung der Einführrampenfläche 44 entspricht der umfangsmäßigen Erstreckung der Nutrampenflächen 46. Sie erstrecken sich jeweils über einen Umfangswinkel von 120°. Die Nutrampenflächen 46 befinden sich radial außen an dem Außenzylinderabschnitt 34. Die Bereiche mit den Nutrampenflächen 46 überlappen jeweils mit den entgegen der Schließdrehrichtung 43 betrachtet folgenden kopfseitigen Rampenabschnitten 42. Dabei überlappt sich jeweils die Nutrampenfläche 46 des in Schließdrehrichtung 43 betrachtet vorderen kopfseitigen Rampenabschnitts 42 mit der Einführrampenfläche 44 des folgenden kopfseitigen Rampenabschnitts 42. Die Nutrampenflächen 46 erstrecken sich in radialer Richtung etwa über die halbe radiale Wanddicke des Außenzylinderabschnitts 34. Die Einführrampenflächen 44 gehen stufenlos in die Nutrampenflächen 46 über. Die Nutrampenflächen 46 haben die gleiche Steigung wie die Einführrampenflächen 44. Die Nutrampenflächen 46 beginnen jeweils in Umfangsrichtung auf Höhe des Anfangs des jeweils im Uhrzeigersinn nachfolgenden kopfseitigen Rampenabschnitts 42. Die Nutrampenflächen 46 enden auf Höhe des Anfangs des umfangsmäßig jeweils übernächsten kopfseitigen Rampenabschnitts 42.

Die Nutrampenflächen 46 begrenzen eine jeweilige Rampennut 48 auf einer axialen Seite. Auf der axial gegenüberliegenden Seite werden die Rampennuten 48 jeweils durch eine der Einführrampenfläche 42 axial gegenüberliegende kopfseitige Haltefläche 49 des entsprechenden Bereichs der nachfolgenden kopfseitigen Rampenabschnitts 42 begrenzt. Die Rampennuten 48 haben eine in Umfangsrichtung konstante axiale Ausdehnung. Ihre radiale Ausdehnung ist in Umfangsrichtung betrachtet ebenfalls konstant.

An die radial äußere Umfangsseite des Außenzylinderabschnitts 34 sind drei Rastelemente 50 einer insgesamt mit 52 bezeichneten Verriegelungseinrichtung der Verbindungseinrichtung 22 angeordnet. Die Rastelemente 50 sind jeweils einstückig mit dem Außenzylinderabschnitt 34 verbunden. Die Rastelemente 50 sind radiale Erhebungen. Die Rastelemente 50 sind in axialer Richtung etwa auf Höhe des radialen Ringscheibenabschnitts 36 angeordnet.

Die Rastelemente 50 sind jeweils etwa keilartig. In einem bzgl. der Schließdrehrichtung 43 der Verbindungseinrichtung 22 hinteren Bereich weist jedes Rastelement 50 eine ansteigende Führungsfläche 54 auf. Die Führungsfläche 54 befindet sich an der radial äußeren Umfangsseite der Rastelemente 50. Am Ende der Führungsfläche 54 schließt sich jeweils eine Rastvertiefung 56 an. Die radiale Ausdehnung der Rastelemente 50 im Bereich der Rastvertiefung 54 ist kleiner als im Bereich des in radialer Richtung erhöhten Endes der Führungsfläche 54. Jedes Rastelement 50 erstreckt sich umfangsmäßig über einen Umfangswinkel von etwa 25° bis 30°. Der Übergang von der Führungsfläche 54 zur entsprechenden Rastvertiefung 56 befindet sich umfangsmäßig betrachtet etwa auf einer Höhe mit dem Ende eines der kopfseitigen Rampenabschnitte 42 und dem Anfang des entsprechend entgegen der Schließdrehrichtung 43 betrachtet übernächsten kopfseitigen Rampenabschnitts 42.

Der Anschlusszylinder 24 und der kopfseitige Verbindungsteil 20 sind von einem koaxialen kreiszylindrischen Außendichtabschnitt 58 umgeben. Die freie Stirnseite des Außendichtabschnitts 58 ist dem Spin-On Filter 14 zugewandt. Sein Innenquerschnitt vergrößert sich zu seiner freien Stirnseite hin. Die radial innere Umfangsseite des Außendichtabschnitts 58 bildet eine Außendichtfläche 60.

Ferner weist der Filtertopf 12 einen Außenkragen 62 auf, der sich abschnittsweise koaxial zur Filterachse 26 erstreckt und den Außendichtabschnitt 58 radial außen teilumfänglich umgibt.

Der Spin-On Filter 14 weist einen runden Querschnitt auf. Er ist im Wesentlichen koaxial zur Filterachse 26. Der Spin-On Filter 14 weist einen Filtertopf 64 auf, in dessen offener Seite ein Filterdeckel 66 befestigt ist. Der Filtertopf 64 hat einen nach außen gewölbten Filterboden 68.

In dem Filtertopf 64 ist ein koaxiales Filterelement 70 angeordnet. Das Filterelement 70 verfügt über ein zickzackförmig gefaltetes, umfangsmäßig geschlossenes Filtermedium 72. An seinen Stirnseiten ist das Filtermedium 72 jeweils dicht mit einer Anschlussendscheibe 74, in Figur 1 oben, und einer Gegenendscheibe 76, unten, verbunden.

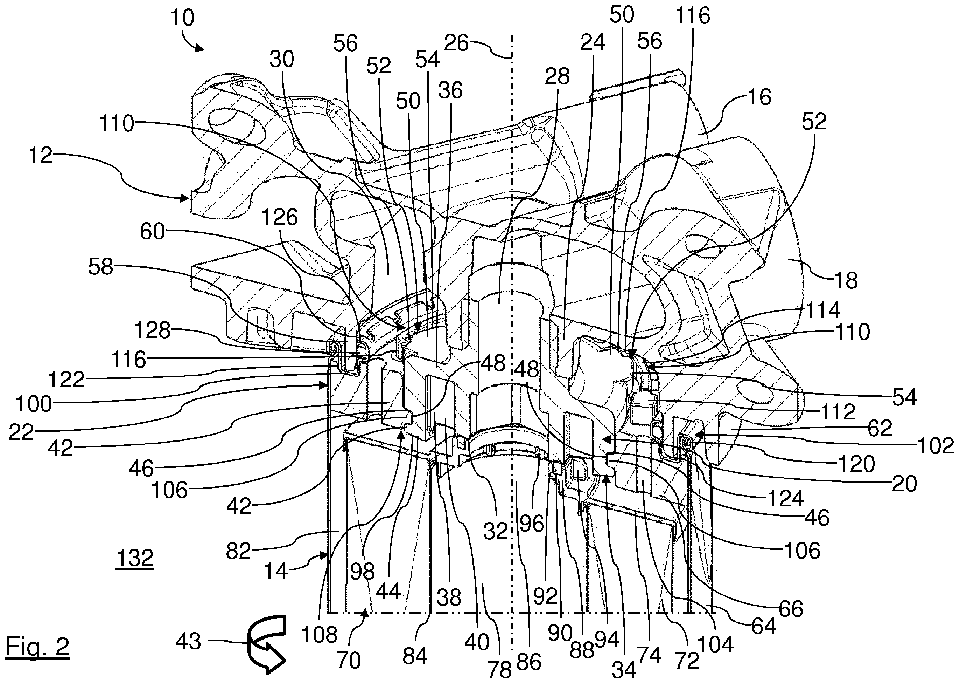

Die Anschlussendscheibe 74 ist im Detail in den Figuren 2, 5 und 6 gezeigt. Sie befindet sich auf der dem Filterdeckel 66 zugewandten Seite des Filterelements 70. Das Filtermedium 72 umgibt einen Elementinnenraum 78 des Filterelements 70. Der Elementinnenraum 78 befindet sich auf einer Reinseite des Filterelements 70.

Die Gegenendscheibe 76 verschließt den Elementinnenraum 78 auf der dem Filterboden 68 zugewandten Stirnseite des Filterelements 70. An der dem Filterboden 78 zugewandten Außenseite der Gegenendscheibe 76 stützen sich mehrere Federelemente 80 ab, die sich andererseits am Federboden 68 abstützen.

Das Filterelement 70 ist radial außen von einem rohseitigen Ringraum 82 umgeben, der von der radial inneren Umfangsseite des Filtertopfs 64 begrenzt wird.

Im Elementinnenraum 78 erstreckt sich ein koaxiales Mittelrohr 84 zwischen der Gegenendscheibe 76 und der Anschlussendscheibe 74. Eine Umfangswand des Mittelrohrs 84 ist für das Motoröl durchlässig. Eine radial innere Umfangsseite, nämlich radial innere Faltkanten, des Filtermediums 72 stützt sich an der radial äußeren Umfangsseite des Mittelrohrs 84 ab.

Die Anschlussendscheibe 74 weist eine koaxiale Auslassöffnung 86 für das filtrierte Motoröl auf. Die Auslassöffnung 86 bildet einen mittigen Ölablaufkanal. An der axial äußeren Seite der Anschlussendscheibe 74 ist einstückig ein koaxialer Dichtungsaufnahmezylinder 88 angeordnet. Eine radial innere Umfangsseite des Dichtungsaufnahmezylinders 88 ist abgestuft. Auf seiner dem Elementinnenraum 78 abgewandten Stirnseite weist der Dichtungsaufnahmezylinder 88 eine koaxiale Dichtungsnut 90 mit einer ringförmigen Innendichtung 92 auf. Die Innendichtung 92 ist bzgl. der Filterachse 26 axial gegenüber dem filterseitigen Verbindungsteil 108 zum Innenraum des Spin-On Filters 14 hin versetzt angeordnet. Die Innendichtung 92 ist als Flachdichtung ausgelegt. Die Innendichtung 92 weist eine um die Auslassöffnung 86 umlaufende Dichtungsfläche 93 auf. Bei montiertem Spin-On Filter 14 liegt die Innendichtung 92 mit ihrer dem Elementinnenraum 78 abgewandten Seite dicht an der Dichtfläche 32 des Anschlusshülsenabschnitts 28 des kopfseitigen Verbindungsteils 20 an. Die Innendichtung 92 wirkt in axialer Richtung. Die Innendichtung 92 trennt eine Rohseite des Filterelements 70, radial außerhalb des Dichtungsaufnahmezylinders 88, dicht von einer Reinseite, radial innerhalb des Dichtungsaufnahmezylinders 88. Der kleinste Innenradius des Dichtungsaufnahmezylinders 88 entspricht etwa dem Innenradius eines gedachten Inkreises des Anschlusshülsenabschnitts 28 auf seiner querschnittserweiterten Seite.

Radial außen ist der Dichtungsaufnahmezylinder 88 mit Stützelementen 94 gegen den sich radial erstreckenden Abschnitt der Anschlussendscheibe 74 abgestützt. Die Stützelemente 94 erstrecken sich jeweils radial und axial. An der radial inneren Umfangsseite des Dichtungsaufnahmeabschnitts 88 sind ferner innere Stützelemente 96 vorgesehen, welche einen Ringabschnitt des Dichtungsaufnahmezylinders 88, der die Dichtungsnut 90 radial innen umgibt, abstützt.

Der Filterdeckel 66 hat die Form eines Rings mit einem etwa rechteckigen Profil. Der Filterdeckel 66 ist aus Metall. Der Filterdeckel 66 hat die Funktion einer Anschlussplatte zum Verbinden des Spin-On Filters 14 mit dem Filterkopf 12. Der Filterdeckel 66 weist eine zur Filterachse 26 koaxiale Aufnahmeöffnung 98 auf zur Aufnahme des Außenzylinderabschnitts 34 des kopfseitigen Verbindungsteils 20. Innerhalb des radial äußeren Randes des Filterdeckels 66 ist an der dem Filterboden 68 abgewandten Außenseite eine koaxiale Ringnut 100 angeordnet zur Aufnahme eines Deckelblechrings 102. Radial zwischen der Ringnut 100 und der Aufnahmeöffnung 98 ist eine Vielzahl von durchgängigen Einlasskanälen 104 angeordnet. Die Einlasskanäle 104 erstrecken sich jeweils parallel zur Filterachse 46. Sie verbinden den Einlassringraum 30 des Filterkopfs 12 mit dem Innenraum des Filtertopfs 64, respektive dem rohseitigen Ringraum 82.

An der radial inneren Umfangsseite des Filterdeckels 66 sind drei filterseitige Rampenabschnitte 106 angeordnet. Die Rampenabschnitte 106 realisieren jeweils Verbindungsstege. Die filterseitigen Rampenabschnitte 106 erstrecken sich jeweils von der radial inneren Umfangsseite des Filterdeckels 66 nach radial innen. Die filterseitigen Rampenabschnitte 106 sind in ihrer Ausdehnung und ihrem umfangsmäßigen Verlauf im Wesentlichen identisch. Die dem Innenraum des Filtertopfs 64 zugewandten Seiten derfilterseitigen Rampenabschnitte 106 bilden jeweils filterseitige Halteflächen 107. Die dem Innenraum des Filtertopfs 64 abgewandten Seiten der filterseitigen Rampenabschnitte 106 bilden jeweils filterseitige Zuführrampen 109. Die filterseitigen Halteflächen 107 und die Zuführrampen 109 verlaufen etwa parallel zueinander. Die filterseitigen Rampenabschnitte 106 erstrecken sich jeweils, analog zu den kopfseitigen Rampenabschnitte 42, schraubenartig bzgl. der Filterachse 26. Ihre Steigungen entsprechen denen der kopfseitigen Rampenabschnitte 42. Die filterseitigen Rampenabschnitte 106 erstrecken sich jeweils bzgl. der Filterachse 26 über einen Umfangswinkel von 120°. Die filterseitigen Rampenabschnitte 106 überlappen sich nicht. Die Anfänge 111 der filterseitigen Rampenabschnitts 106 befinden sich auf der dem Innenraum des Filtertopfs 64 abgewandten axialen Seite. Die Anfänge 111 sind bei montiertem Spin-On Filter 14 dem Filterkopf 12 zugewandt. Die Anfänge 111 sind zu einem dem Elementinnenraum 78 abgewandten, kopfseitigen, die Auslassöffnung 86 umgebenden radial inneren Rand des Filterdeckels 66 beabstandet. Umfangsmäßig betrachtet befindet sich der Anfang 111 jedes filterseitigen Rampenabschnitts 106 auf einer Höhe mit dem Ende des in Schließdrehrichtung 43 vorhergehenden filterseitigen Rampenabschnitts 106. Die axialen Höhen der filterseitigen Rampenabschnitte 106 sind umfangsmäßig konstant. Sie entsprechen den axialen Höhen der Rampennuten 48 der kopfseitigen Rampenabschnitte 42. Die filterseitigen Rampenabschnitte 106 und die Aufnahmeöffnung 98 bilden insgesamt einen filterseitigen Verbindungsteil 108 der Verbindungseinrichtung 22. Die Dichtungsfläche 93 der Innendichtung 92 ist axial gegenüber dem filterseitigen Verbindungsteil 108 zu dem Filterelement 70 hin versetzt.

An der dem Innenraum des Filtertopfs 64 abgewandten Außenseite des Filterdeckels 66 sind drei Rastfederelemente 110 angeordnet. Die Rastfederelemente 110 sind Teile der Verriegelungseinrichtung 52. Die Rastfederelemente 110 verfügen jeweils über einen Halteabschnitt 112. Der Halteabschnitt 112 ist radial zwischen der Ringnut 100 und der Aufnahmeöffnung 98 einstückig mit dem Filterdeckel 66 verbunden. Ein jeweiliger Federarmabschnitt 114 der Rastfederelemente 110 ist einstückig mit dem Halteabschnitt 112 verbunden. Die Federarmabschnitte 114 befinden sich in Schließdrehrichtung 43 betrachtet jeweils an der Vorderseite der Halteabschnitte 112. Die Federarmabschnitte 114 erstrecken sich umfangsmäßig jeweils über einen Umfangswinkel von etwa 30°. Die Federarmabschnitte 114 können an den Halteabschnitten 112 in radialer Richtung federnd nach außen gebogen werden. An ihren den Halteabschnitten 112 jeweils abgewandten freien Ende gehen die Federarmabschnitte 114 jeweils in eine Rastnase 116 über. Die Rastnasen 116 erstrecken sich nach radial innen. Die Rastnase 116 befinden sich jeweils an dergleichen Umfangsseite wie ein Anfang 111 einer der filterseitigen Rastabschnitte 106 und ein Ende des jeweils vorherigen filterseitigen Rampenabschnitts 106.

Der Deckelblechring 102 weist ein mehrfach gebogenes Profil auf. Mit seiner radial äußeren Umfangsseite ist er mittels einer Bördelverbindung 120 fest mit einem freien Rand des Filtertopfs 64 verbunden. Radial innerhalb der Bördelverbindung 120 weist der Deckelblechring 102 einen etwa rechtwinkligen, umfangsmäßig geschlossen verlaufenden erste Biegeabschnitt auf. Im Bereich des ersten Biegeabschnitts bildet der Deckelblechring 102 auf seiner dem Filterdeckel 66 zugewandten Seite einen Kragen 122, der in die Ringnut 100 des Filterdeckels 66 eingreift.

Auf der dem Filterdeckel 66 abgewandten Außenseite des Deckelblechrings 102 realisiert der Kragen 122 eine Aufnahmenut 124 für den Außendichtabschnitt 58 des Filterkopfs 12.

Die radial innere Umfangsseite des Deckelblechrings 102 ist zu einem U-förmigen Profil gebogen, dessen Öffnung nach radial außen zeigt. Das U-förmige Profil beinhaltet eine koaxiale, umfangsmäßig geschlossen verlaufende Dichtungsnut 126. In der Dichtungsnut 126 ist eine Außendichtung 128 angeordnet. Die Außendichtung 128 ist eine O-Ring-Dichtung. Die Außendichtung 128 ist bzgl. der Filterachse 26 nach radial außen orientiert. Die Außendichtung 128 wirkt in radialer Richtung.

An seinem dem Filterdeckel 66 axial abgewandten Innenrand weist der Deckelblechring 102 umfangmäßig verteilt eine Mehrzahl von Einkerbungen 130 auf.

Bei montiertem Spin-On Filter 14 liegt die Außendichtung 128 dicht an der Außendichtfläche 60 des Außendichtabschnitts 58 an. Die Außendichtung 128 trennt die Rohseite des Filterelements 70, respektive den Einlassringraum 30, von der Umgebung 132.

Zum Verbinden mit dem Filterkopf 12 wird der Spin-On Filter 14 mit dem Filterdeckel 66 voran axial zu einer Verbindungsachse, welche im Ausführungsbeispiel mit der Filterachse 26 zusammenfällt, in einer Steckbewegung zunächst zu dem kopfseitigen Verbindungsteil 20 des Filterkopfs 12 hin bewegt. Der Außenzylinderabschnitt 34 wird in die Aufnahmeöffnung 98 des Filterdeckels 66 eingesteckt, bis die filterseitigen Rampenabschnitte 106 axial an den Einführrampenflächen 44 der kopfseitigen Rampenabschnitte 42 anstoßen. Der Außendichtabschnitt 58 befindet sich axial entfernt von der Außendichtung 128.

Mit einer Drehbewegung des Wechselzylinders 14 in Schließdrehrichtung 43 wird der filterseitige Verbindungsteil 108 in den kopfseitigen Verbindungsteil 20 eingeschraubt. Dabei greifen die filterseitigen Rampenabschnitte 106 jeweils in eine der Rampennuten 48 ein. Nach einem Drehwinkel von 60° vom Beginn des Eintauchens der filterseitigen Rampenabschnitte 106 in die Rampennuten 48 beginnt die Außendichtung 128 an der Außendichtfläche 60 des Außendichtabschnitts 58 anzuliegen und wird beim Weiterdrehen des Spin-On Filters 14 in dem querschnittserweiterten Eingangsbereich geführt.

Nach einer weiteren Drehung um 60° stoßen die in Schließdrehrichtung 43 vorderen Enden der filterseitigen Rampenabschnitte 160 an den hinteren Enden der Rampennuten 48 an. Die Enden der Rampennuten 48 bilden Anschläge, mit denen im Schließzustand der Verbindungseinrichtung 22 ein Weiterdrehen des Spin-On Filters 14 verhindert wird.

Im Schließzustand der Verbindungseinrichtung 22 liegt die Innendichtung 92 dicht und in axialer Richtung zusammengepresst an der Dichtfläche 32 des Anschlusshülsenabschnitts 28 an.

In einer Endphase der Schließbewegung stoßen ferner die Rastnasen 116 der Federarmabschnitte 114 der Rastfederelemente 110 jeweils an die in Schließdrehrichtung 43 hinteren Enden der Führungsflächen 54 der Rastelemente 50 an. Bei dem Weiterdrehen des Spin-On Filters 14 in Schließdrehrichtung 43 werden die Rastnasen 116 an den Führungsflächen 54 geführt. Im Schließzustand der Verbindungseinrichtung 22 rasten die Rastnasen 116 jeweils in die Rastvertiefungen 56 der Rastelemente 50 ein. Beim Einrasten der Rastnasen 116 wird ein wahrnehmbares Geräusch erzeugt.

Die eingerasteten Rastnasen 116 erschweren das Öffnen der Verbindungseinrichtung 22 durch Drehen des Wechselzylinders 14 entgegen der Schließdrehrichtung 43. Ferner erschwert die komprimierte Innendichtung 92 aufgrund der Reibung das Öffnen der Verbindungseinrichtung 22.

Das Entfernen des Spin-On Filters 14 von dem Filterkopf 12 erfolgt durch Drehen des Spin-On Filters 14 entgegen der Schließdrehrichtung 43. Dabei muss zunächst die Federkraft der Federabschnitte 114 und die Reibungskraft zwischen der Innendichtung 92 und der Dichtfläche 32 überwunden werden.

Beim Betrieb des Filtersystems 10 wird zu filtrierendes Motoröl durch den Einlass 16 des Filterkopfs 12 dem Einlassringraum 30 zugeführt. Von dort aus gelangt das Motoröl durch die Einlasskanäle 104 in den rohseitigen Ringraum 82 des Spin-On Filters 14. Das zu filtrierende Motoröl durchströmt das Filtermedium 72 von radial außen nach radial innen und wird gereinigt. Das gereinigte Motoröl verlässt den Elementinnenraum 78 durch die Auslassöffnung 86 und gelangt in den Innenraum des Anschlusshülsenabschnitts 28, der als Fluidstutzen mit einem Ölkanal dient. Der Innenraum des Anschlusshülsenabschnitts 28 kommuniziert also fluidtechnisch mit der Auslassöffnung 86. Von dort aus strömt das gereinigte Motoröl in den Auslass 18 des Filterkopfs 12 und verlässt das Filtersystem 10.

Bei einer alternativen Bauform der Filtervorrichtung können am Filterkopf 20 und im Speziellen an dem Ringscheibenabschnitt 36 des Anschlusshülsenabschnitts 28 Einlasskanäle vorgesehen sein, so dass das Rohfluid alternativ oder ergänzend zu dem Einlass über die Einlasskanäle 104 durch kopfseitigen Einlasskanäle in den Filter strömen kann.

## Patentansprüche

1. Spin-On-Filter (14) für eine Filtervorrichtung (10) für Fluid, insbesondere Flüssigkeit, insbesondere Öl oder Kraftstoff, insbesondere einer Brennkraftmaschine, insbesondere eines Kraftfahrzeugs,
wobei der Spin-On Filter (14) aufweist:
- einen Gehäusetopf (64), in welchem ein Filterelement (70) angeordnet ist,
- einen stirnseitig an dem Gehäusetopf (64) angeordneten Anschlusskörper (66), welcher mit einer mittigen Zentralöffnung (98) und insbesondere mit wenigstens einer gegenüber der Zentralöffnung nach radial außen versetzten Fluidöffnung (104) versehen ist,
- ein filterseitiges Verbindungsteil (108) einer Verbindungseinrichtung (22) zum lösbaren Verbinden des Spin-On Filters (14) mit einem Filterkopf (12) der Filtervorrichtung (10), welches an der mittigen Zentralöffnung (98) angeordnet ist,
wobei das filterseitige Verbindungsteil (108) mittels einer kombinierten Steck- und Drehbewegung bzgl. einer Verbindungsachse (26) mit einem Anschlussstutzen eines kopfseitigen Verbindungsteils (20) des Filterkopfs (12) lösbar verbindbar ist,
und wobei eine Innendichtung (92) vorgesehen ist, welche eine um einen mittigen Fluidkanal (86) umlaufende und axial gegenüber dem filterseitigen Verbindungsteil (108) zu dem Filterelement (70) hin versetzte Dichtungsfläche (93) aufweist, an welcher eine umlaufende Dichtfläche (32) eines filterkopfseitigen Fluidstutzens (28) dichtend anlegbar ist, um eine Rohseite (82) von einer Reinseite (78) des Spin-On Filters (14) zu trennen, wobei die Innendichtung (92) an einem Endkörper, insbesondere einer Endscheibe (74), eines Filterelements, insbesondere eines Rundfilterelements (70), des Spin-On Filters (14) angeordnet ist, und wobei die Dichtungsfläche (93) der Innendichtung (92) eine bzgl. der Verbindungsachse (26) zumindest axiale Anlage für die Dichtfläche (32) des kopfseitigen Fluidstutzens (28) bildet.

2. Spin-On Filter nach Anspruch 1, **dadurch gekennzeichnet, dass** die Innendichtung (92) mit dem Filterelement (80) verbunden ist.

3. Spin-On Filter nach einem der vorigen Ansprüche, **dadurch gekennzeichnet, dass** das filterseitige Verbindungsteil (108) mehrere Verbindungsstege (106) aufweist, die in Umfangrichtung der Verbindungsachse (26) verteilt an der Zentralöffnung (98) angeordnet sind.

4. Spin-On Filter nach einem der vorigen Ansprüche, **dadurch gekennzeichnet, dass** die Verbindungseinrichtung (22) wenigstens eine bzgl. der Verbindungsachse (26) umfangsmäßige Außendichtung (128) aufweist.

5. Spin-On Filter nach einem der vorigen Ansprüche, **dadurch gekennzeichnet, dass** die Innendichtung (92) eine Ringdichtung ist und/oder ein rechteckiges Profil hat.

6. Spin-On Filter nach einem der vorigen Ansprüche, **dadurch gekennzeichnet, dass** die Innendichtung (92) koaxial zur Verbindungsachse (26) angeordnet ist.

7. Filtervorrichtung (10) für Fluid, insbesondere Flüssigkeit, insbesondere Öl oder Kraftstoff, insbesondere einer Brennkraftmaschine, insbesondere eines Kraftfahrzeugs, mit einem Filterkopf (12), welcher einen kopfseitigen Verbindungsteil (20) einer mittels einer kombinierten Steck- und Drehbewegung bzgl. einer Verbindungsachse (26) schließbaren und lösbaren Verbindungseinrichtung (22) für einen Spin-On Filter (14) aufweist und mit einem Spin-On Filter (14) nach einem der Ansprüche 1 bis 6.

8. Filtervorrichtung nach Anspruch 7, **dadurch gekennzeichnet, dass** wenigstens ein erster der Verbindungsteile (20) wenigstens zwei bzgl. der Verbindungsachse (26) schraubenartig verlaufende erste Rampenabschnitte (42) aufweist und der zweite Verbindungsteil (108) wenigstens zwei bzgl. der Verbindungsachse (26) schraubenartig verlaufende zweite Rampenabschnitte (106) aufweist, die zum Schließen der Verbindungseinrichtung (22) aneinander geführt sind.

9. Filtervorrichtung nach Anspruch 7 oder 8, **dadurch gekennzeichnet, dass** die Verbindungseinrichtung (22) wenigstens eine Verriegelungseinrichtung (52) aufweist mit wenigstens einem kopfseitigen Verriegelungsteil (50) und wenigstens einen filterseitigen Verriegelungsteil (110), die in der Schließposition der Verbindungseinrichtung (42) miteinander eine entriegelbare Verbindung eingehen können.

10. Filtervorrichtung nach einem derAnsprüche 7 bis 9, **dadurch gekennzeichnet, dass** die Verbindungseinrichtung (22) wenigstens eine bzgl. der Verbindungsachse (26) umfangsmäßige Außendichtung (128) aufweist, welche zwischen dem Filterkopf (12) und dem Spin-On Filter (14) wenigstens radial bzgl. der Verbindungsachse (26) abdichten und einen fluidführenden Raum (30) der Filtervorrichtung (10) von der Umgebung (132) trennen kann.

11. Filterkopf (12) einer Filtervorrichtung (10) für Fluid, insbesondere Flüssigkeit, insbesondere Öl oder Kraftstoff, insbesondere einer Brennkraftmaschine, insbesondere eines Kraftfahrzeugs, nach einem der Ansprüche 7 bis 10, wobei der Filterkopf (12) einen kopfseitigen Verbindungsteil (20) einer mittels einer kombinierten Steck- und Drehbewegung bzgl. einer Verbindungsachse (26) schließbaren und lösbaren Verbindungseinrichtung (22) für einen Spin-On Filter (14) nach einem der Ansprüche 1 bis 6, aufweist, wobei ein filterseitige Verbindungsteil (108) der Verbindungseinrichtung (22) am Spin-On Filter (14) mittels einer kombinierten Steck- und Drehbewegung bzgl. der Verbindungsachse (26) mit einem Anschlussstutzen des kopfseitigen Verbindungsteils (20) des Filterkopfs (12) lösbar verbindbar ist, wobei ein kopfseitiger Fluidstutzen (28) eine umlaufende Dichtfläche (32) aufweist, an welcher eine Innendichtung (92), welche eine um einen mittigen Fluidkanal (86) des Spin-On Filters (14) umlaufende und axial gegenüber dem filterseitigen Verbindungsteil (108) zu dem Filterelement (70) hin versetzte Dichtungsfläche (93) aufweist, axial dichtend anlegbar ist, um eine Rohseite (82) von einer Reinseite (78) des Spin-On Filters (14) zu trennen.

## Claims

1. Spin-on filter (14) for a filter apparatus (10) for fluid, in particular liquid, in particular oil or fuel, in particular of an internal combustion engine, in particular of a motor vehicle,
wherein the spin-on filter (14) features:
- a housing pot (64) in which a filter element (70) is disposed,
- a connecting body (66) disposed frontally on the housing pot (64), which connecting body is provided with a centrally located central opening (98) and in particular with at least one fluid opening (104) which is offset radially outwardly opposite the central opening,
- a filter-sided connecting part (108) of a connecting means (22) for releasably connecting the spin-on filter (14) to a filter head (12) of the filter apparatus (10), which connecting part is disposed at the centrally located central opening (98),
wherein the filter-sided connecting part (108) is releasably connectable via a combined plug-in and rotational movement with respect to a connecting axis (26) to a connecting piece of a head-sided connecting part (20) of the filter head (12),
and wherein an internal seal (92) is provided which features a sealing surface (93) surrounding a central fluid channel (86) and axially offset with respect to the filter-sided connecting part (108) towards the filter element (70), and on which a circumferential sealing surface (32) of a filter-head-sided fluid connection (28) can sealingly abut in order to separate a raw side (82) from a clean side (78) of the spin-on filter (14), wherein the internal seal (92) is disposed on an end body, in particular of an end disc (74), of a filter element, in particular of a round filter element (70), of the spin-on filter (14), and wherein the sealing surface (93) of the internal seal (92) forms an at least axial contact with respect to the connecting axis (26) for the sealing surface (32) of the head-sided fluid connection (28).

2. Spin-on filter according to claim 1, **characterized in that** the internal seal (92) is connected to the filter element (80).

3. Spin-on filter according to one of the preceding claims, **characterized in that** the filter-sided connecting part (108) features a plurality of connecting webs (106) which are disposed in a distributed manner in the circumferential direction of the connecting axis (26) on the central opening (98).

4. Spin-on filter according to one of the preceding claims, **characterized in that** the connecting means (22) features at least one circumferential external seal (128) with respect to the connecting axis (26).

5. Spin-on filter according to one of the preceding claims, **characterized in that** the internal seal (92) is an annular seal and/or has a rectangular profile.

6. Spin-on filter according to one of the preceding claims, **characterized in that** the internal seal (92) is disposed coaxially with respect to the connecting axis (26).

7. Filter apparatus (10) for fluid, in particular liquid, in particular oil or fuel, in particular of an internal combustion engine, in particular of a motor vehicle, with a filter head (12) which features a head-sided connecting part (20) of a connecting means (22) for a spin-on filter (14), which connecting means can be closed and released via a combined plug-in and rotational movement with respect to a connecting axis (26) and with a spin-on filter (14) according to one of the claims 1 to 6.

8. Filter apparatus according to claim 7, **characterized in that** at least a first of the connecting parts (20) features at least two first ramp portions (42) extending helicoidally with respect to the connecting axis (26) and that the second connecting part (108) features at least two second ramp portions (106) extending helicoidally with respect to the connecting axis (26), which are joined for closing the connecting means (22).

9. Filter apparatus according to claim 7 or 8, **characterized in that** the connecting means (22) features at least one locking means (52) with at least one head-sided locking part (50) and at least one filter-sided locking part (110) which, in the closed position of the connecting means (42), can form an unlockable connection with each other.

10. Filter apparatus according to one of the claims 7 to 9, **characterized in that** the connecting means (22) features at least one circumferential external seal (128) with respect to the connecting axis (26), which circumferential external seal is able to seal, at least radially with respect to the connecting axis (26), between the filter head (12) and the spin-on filter (14) and separate a fluid-guiding chamber (30) of the filter apparatus (10) from the surroundings (132).

11. Filter head (12) of a filter apparatus (10) for fluid, in particular liquid, in particular oil or fuel, in particular of an internal combustion engine, in particular of a motor vehicle, according to one of the claims 7 to 10, wherein the filter head (12) features a head-sided connecting part (20) of a connecting means (22) for a spin-on filter (14), which connecting means can be closed and released via a combined plug-in and rotational movement with respect to a connecting axis (26) according to one of the claims 1 to 6, wherein a filter-sided connecting part (108) of the connecting means (22) on the spin-on filter (14) is releasably connectable to a connecting piece of the head-sided connecting part (20) of the filter head (12) via a combined plug-in and rotational movement with respect to the connecting axis (26), wherein a head-sided fluid connection (28) features a circumferential sealing surface (32) against which an internal seal (92), which features a sealing surface (93) that surrounds a central fluid channel (86) of the spin-on filter (14) and is axially offset towards the filter element (70) with respect to the filter-sided connecting part (108), can abut in an axially sealing manner in order to separate a raw side (82) from a clean side (78) of the spin-on filter (14).

## Revendications

1. Filtre à visser (14) pour un dispositif de filtration (10) pour des fluides, notamment pour des liquides, notamment pour de l'huile ou du carburant, notamment d'un moteur à combustion interne, notamment d'un véhicule automobile,
le filtre à visser (14) présentant :
- un pot de boîtier (64) dans lequel est disposé un élément filtrant (70),
- un corps de raccordement (66) disposé sur la face frontale sur le pot de boîtier (64), lequel corps de raccordement est pourvu d'un orifice central situé au milieu (98) et notamment d'au moins un orifice de fluide (104) décalé en sens radial vers l'extérieur en face de l'orifice central,
- une pièce de raccordement (108) côté filtre d'un dispositif de raccordement (22) destinée à relier le filtre à visser (14) de manière amovible à une tête de filtre (12) du dispositif de filtration (10), la pièce de raccordement étant disposée sur l'orifice central situé au milieu (98),
la pièce de raccordement (108) côté filtre pouvant être reliée de manière amovible, par un mouvement d'enfichage et de rotation combiné par rapport à un axe de liaison (26), à une tubulure de raccord d'une pièce de raccordement (20) côté tête de la tête de filtre (12),
et un joint intérieur (92) étant prévu, qui présente une surface d'étanchéité (93) s'étendant autour d'un canal de fluide central (86) et décalée axialement vers l'élément filtrant (70) par rapport à la pièce de raccordement (108) côté filtre, contre laquelle surface d'étanchéité une surface d'étanchéité circonférentielle (32) d'une buse de fluide (28) côté tête de filtre peut être placée de manière étanche, afin de séparer un côté brut (82) d'un côté pur (78) du filtre à visser (14), le joint intérieur (92) étant disposé sur un élément d'extrémité, notamment un disque d'extrémité (74), d'un élément filtrant, notamment un élément filtrant rond (70), du filtre à visser (14), et la surface d'étanchéité (93) du joint intérieur (92) formant un contact au moins axial par rapport à l'axe de liaison (26) pour la surface d'étanchéité (32) de la buse de fluide (28) côté tête.

2. Filtre à visser selon la revendication 1, **caractérisé ce que** le joint intérieur (92) est connecté à l'élément filtrant (80).

3. Filtre à visser selon une des revendications précédentes, **caractérisé en ce que** la pièce de raccordement (108) côté filtre présente plusieurs nervures de liaison (106) qui sont disposées de manière répartie en sens circonférentiel de l'axe de liaison (26) sur l'orifice central (98).

4. Filtre à visser selon une des revendications précédentes, **caractérisé en ce que** le dispositif de raccordement (22) présente au moins un joint extérieur circonférentiel (128) par rapport à l'axe de liaison (26).

5. Filtre à visser selon une des revendications précédentes, **caractérisé en ce que** le joint intérieur (92) est un joint annulaire et/ou présente un profile rectangulaire.

6. Filtre à visser selon une des revendications précédentes, **caractérisé en ce que** le joint intérieur (92) est disposé de manière coaxiale par rapport à l'axe de liaison (26).

7. Dispositif de filtration (10) pour des fluides, notamment pour des liquides, notamment pour de l'huile ou du carburant, notamment d'un moteur à combustion interne, notamment d'un véhicule automobile, avec une tête de filtre (12) qui présente une pièce de raccordement (20) côté tête d'un dispositif de raccordement (22) pour un filtre à visser (14), lequel dispositif de raccordement peut être fermé et dégagé au moyen d'un mouvement combiné d'enfichage et de rotation par rapport à un axe de liaison (26) et avec un filtre à visser (14) selon une des revendications 1 à 6.

8. Dispositif de filtration selon la revendication 7, **caractérisé en ce qu'au** moins une première pièce des pièces de raccordement (20) présente au moins deux premiers tronçons de rampe (42) s'étendant de manière hélicoïdale par rapport à l'axe de liaison (26) et que la seconde pièce de raccordement (108) présente au moins deux seconds tronçons de rampe (106) s'étendant de manière hélicoïdale par rapport à l'axe de liaison (26) qui sont réunis pour fermer le dispositif de raccordement (22).

9. Dispositif de filtration selon une des revendications 7 ou 8, **caractérisé en ce que** le dispositif de raccordement (22) présente au moins un dispositif de verrouillage (52) avec au moins un élément de verrouillage (50) côté tête et au moins un élément de verrouillage (110) côté filtre qui peuvent former ensemble un assemblage déverrouillable en position fermée du dispositif de raccordement (42).

10. Dispositif de filtration selon une des revendications 7 à 9, **caractérisé en ce que** le dispositif de raccordement (22) présente au moins un joint extérieur circonférentiel (128) par rapport à l'axe de liaison (26), lequel joint extérieur circonférentiel peut étancher, au moins en sens radial par rapport à l'axe de liaison (26), entre la tête de filtre (12) et le filtre à visser (14) et séparer un espace (30) acheminant du fluide du dispositif de filtration (10) de l'environnement (132).

11. Tête de filtre (12) d'un dispositif de filtration (10) pour des fluides, notamment des liquides, notamment de l'huile ou du carburant, notamment d'un moteur à combustion interne, notamment d'un véhicule automobile, selon une des revendications 7 à 10, la tête de filtre (12) présentant une pièce de raccordement (20) côté tête d'un dispositif de raccordement (22) pour un filtre à visser (14), lequel dispositif de raccordement peut être fermé et dégagé au moyen d'un mouvement combiné d'enfichage et de rotation par rapport à un axe de liaison (26) selon une des revendications 1 à 6, une pièce de raccordement (108) côté filtre du dispositif de raccordement (22) sur le filtre à visser (14) étant connectable de manière amovible au moyen d'un mouvement combiné d'enfichage et de rotation par rapport à l'axe de liaison (26) à une tubulure de raccord de la pièce de raccordement (20) côté tête de la tête de filtre (12), une buse de fluide (28) côté tête présentant une surface d'étanchéité circonférentielle (32) contre laquelle un joint intérieur (92), qui présente une surface d'étanchéité (93) disposée de manière circonférentielle autour d'un canal de fluide central (86) du filtre à visser (14) et décalée axialement vers l'élément filtrant (70) par rapport à la pièce de raccordement (108) côté filtre, peut être placé de manière axialement étanche pour séparer un côté brut (82) d'un côté pur (78) du filtre à visser (14).
